# EUROPÄISCHE PATENTSCHRIFT

(11) **EP 4 617 671 B1**
(45) Veröffentlichungstag und Bekanntmachung des Hinweises auf die Patenterteilung: **04.11.2026**
(21) Anmeldenummer: 24162771.0
(22) Anmeldetag: 11.03.2024
(51) Int. Cl.: G01N 35/00, B25J 9/00, B25J 9/16

(54) **IN-VITRO-DIAGNOSTISCHE LABOR-ANORDNUNG UND VERFAHREN ZU DEREN BETRIEB**
IN VITRO DIAGNOSTIC LABORATORY ARRANGEMENT AND METHOD FOR OPERATING THE SAME
DISPOSITIF DE DIAGNOSTIC IN VITRO EN LABORATOIRE ET SON PROCÉDÉ DE FONCTIONNEMENT

(43) Veröffentlichungstag der Anmeldung: 17.09.2025
(73) Patentinhaber: MVZ Medizinische Labore Dessau Kassel GmbH, 06847 Dessau (DE)
(72) Erfinder: Böttcher-Lorenz, Juliane, 22395 Hamburg (DE)
(74) Vertreter: Zenz Patentanwälte Partnerschaft mbB

(56) Entgegenhaltungen:
- US-A1- 2021 094 184
- US-A1- 2021 270 858

## Beschreibung

Die Erfindung betrifft eine in-vitro-diagnostische Labor-Anordnung mit wenigstens zwei Analysegeräten und einem Handhabungsroboter und Verfahren zum Betreiben einer solchen Labor-Anordnung.

Die DE 10 2021 114 970 A1 beschreibt eine vollautomatische in-vitro-diagnostische Labor-Anordnung mit zwei oder mehr Analysegeräten, auf die ein als Pick-and-Place-Roboter ausgeführter Handhabungsroboter zum Handhaben von Proben-Behältnissen und zur Übergabe der Proben-Behältnisse an die Analysegeräte zugreifen kann. Ferner umfasst die bekannte Anordnung eine Übergabestation mit einer Ablage für Proben-Behältnisse mit zu analysierenden Proben, auf die der Handhabungsroboter zugreifen kann. Die Übergabestation ist benachbart zu einem Durchreiche-Fenster angeordnet, wobei eine Bedienperson die Proben-Behältnisse durch das Fenster hindurch auf die Ablage abstellen kann. Ein Detektor erfasst dabei die Präsenz der Hand des Bedieners. Dann steuert eine Steuereinrichtung den Handhabungsroboter derart, dass er sich von der Übergabestation fernhält. Die Labor-Anordnung ist umhaust, das heißt, sie ist derart von Wandungen oder Absperrungen umgeben, dass die Raumbereiche in Reichweite des Pick-and-Place-Roboters, insbesondere die Raumbereiche zwischen dem Handhabungsroboter und den Analysegeräten sowie der Übergabestation nicht zugänglich sind, so dass es einer Bedienperson nicht möglich ist, ein Analysegerät direkt mit Proben-Behältnissen zu beschicken oder Proben-Behältnisse dort zu entnehmen. Sofern eine Person diese Raumbereiche in Reichweite des Roboters betritt, wird dies von Sensoren erfasst und die Bewegung des Roboters gestoppt, um Unfälle zu vermeiden. Die bekannte Labor-Anordnung gestattet eine Übergabe von Proben-Behältnissen an die Analysegeräte und eine Entnahme von Proben-Behältnissen aus den Analysegeräten ausschließlich durch den Handhabungsroboter. Dadurch ist es nicht möglich, dass freie Aufnahmekapazitäten eines Analysegeräts durch eine parallele manuelle Eingabe durch einen Bediener ausgenutzt werden können. Die bekannte Anordnung ist, abgesehen vom Zuführen der Proben am Fenster der Übergabestation, für Abläufe ohne Eingriff des Laborpersonals vorgesehen, was dazu führt, dass die eingebundenen Analysegeräte in den Laborbetriebszeiten, in denen Personal zur Verfügung steht, unzureichend ausgelastet sein können.

Daneben sind aus dem Stand der Technik mobile Roboter bekannt, die sich in demselben Raum bewegen können, in dem sich auch Bedienpersonen bewegen und die Bedienpersonen beim Beschicken von Analysegeräten mit Proben-Behältnissen und beim Versorgen der Analysegeräte mit Verbrauchsmaterialien und Reagenzien unterstützen können.

So offenbart die US 2021/0270858 A1 ein automatisiertes Analysesystem zur Untersuchung von Blut- und Urinproben. In einem räumlichen Bereich eines Labors sind - beabstandet zueinander - mehrere Analyseautomaten, Kühlschränke, Abfallcontainer und ein Arbeitstisch angeordnet, zwischen denen sich mehrere autonome mobile Roboter bewegen, die auf dem Arbeitstisch eintreffende zu untersuchende Proben aufnehmen und an die Analyseautomaten übergeben können. Benachbart zu den Analyseautomaten sind Verarbeitungseinheiten zur präanalytischen Verarbeitung der Proben angeordnet. Die Bewegung der Roboter wird durch eine Dispositionsvorrichtung (einen Computer) gesteuert. In dem räumlichen Bereich des Labors kann sich ein Bediener bewegen, um beispielsweise einen Analyseautomaten zu warten. Sensoren erfassen die Bewegung des Bedieners und davon ausgehend, in Kenntnis der geplanten Bewegungen der Roboter, ob die Gefahr einer Kollision aufgrund sich überlappender Bewegungspfade besteht. Dann wird beispielsweise der Bediener gewarnt oder die Bewegung des betroffenen mobilen Roboters verlangsamt oder angehalten.

Die US 2021/0094184 A1 beschreibt im Bereich der Biowissenschaften verwendete Laboranordnungen. Es wird vorgeschlagen, selbst-navigierende mobile Verarbeitungsroboter einzusetzen, die an die Labor-Verarbeitungsstationen heranfahren können, um an diese Verarbeitungsstationen Proben-Behältnis zu übergeben und die Verarbeitungsstationen mit Ausrüstungen und Verbrauchsmaterial zu versorgen oder zu reinigen und Abfälle zu entsorgen. Die mobilen Verarbeitungsroboter können darüber hinaus beispielsweise eine Versiegelungsfolie von einer Probe und/oder einem Tray entfernen, eine Identifikation einer Probe lesen, Flüssigkeiten pipettieren und/oder Röhrchen verschließen und öffnen. Bei einer Ausführungsform wird ein paralleles Arbeiten einer Bedienperson und wenigstens eines kollaborativen selbst-navigierenden mobilen Roboters in einer gemeinsamen Zugriffszone ermöglicht. Dazu sind die Greifarme des Roboters mit Sensoren ausgerüstet, um eine Kollision mit Bedienern der Verarbeitungsstationen zu vermeiden. Die Sensoren erfassen Hindernisse und Bediener im Umfeld des Roboter-Greifarms, indem die Sensorsignale beispielsweise von einem neuronalen Netzwerk verarbeitet werden, und die Steuereinrichtung steuert den Roboterarm derart, dass eine Kollision vermieden wird, indem beispielsweise die Bewegung des Roboter-Greifarms verlangsamt oder angehalten wird.

Ein anderer mobiler Laborassistenzroboter für eine in-vitro-diagnostische Laboranordnung ist in der DE 20 2022 103 719 U1 oder der EP 4 140 661 A1 beschrieben. Auch hier kann der Assistenzroboter Aufgaben direkt am Laboranalysegerät ausführen, wie beispielsweise das Beladen und Entladen der Proben und Reagenzien, das Bedienen der Laboranalysegeräte (z.B. Öffnen einer Schublade), die Proben-Archivierung, das Entleeren des Mülls, das Management der Verbrauchsmaterialien und die Probenvorbereitung (z.B. Öffnen von Proben-Behältnissen). Der mobile Assistenzroboter kann einen Ablagebereich für zu transportierende Proben und Reagenzien aufweisen, der auch gekühlt sein kann. Eine Kollision des Assistenzroboters mit einem Bediener soll durch den Einsatz von Sensoren zur Umgebungserkennung und einer Steuereinrichtung mit Navigationseinheit und Identifikationseinheit zum Identifizieren der Objekte vermieden werden.

Nachteilig bei dem aus den genannten Druckschriften bekannten Prinzip der mobilen kollaborativen Roboter sind der sehr hohe Aufwand bei der Sensorik und der Steuerung des Roboterfahrzeugs und der Greifarme und die damit verbundenen Kosten.

Der Erfindung liegt daher die Aufgabe zugrunde, eine einfache, das heißt weniger kostenintensive kollaborative in-vitro-diagnostische Labor-Anordnung zu schaffen, die die Flexibilität und den Gesamtdurchsatz bei besserer Auslastung der Analysegeräte erhöht.

Diese Aufgabe wird durch eine in-vitro-diagnostische Labor-Anordnung mit den Merkmalen des Anspruchs 1 gelöst.

Diese in-vitro-diagnostische Labor-Anordnung umfasst wenigstens zwei Analysegeräte, einen Handhabungsroboter und einen Arbeitstisch zur Prä- und Postanalytik. Der Arbeitstisch ist ortsfest angeordnet und weist eine Ablagefläche zur Ablage von Proben enthaltenden Proben-Behältnissen und/oder Proben-Behältnisse aufnehmenden Aufnahmevorrichtungen (beispielsweise als Racks oder Trays bezeichnet) auf. Die Ablagefläche des Arbeitstisches kann vorzugsweise außerdem Bereiche zur Ablage von Reagenzien enthaltenden Behältnissen aufweisen, wobei die Behältnisse von dem Handhabungsroboter den Analysegeräten zugeführt werden können. Die Ablagefläche umfasst einen Probeneingangsbereich zur Ablage von zu analysierende Proben enthaltenden Proben-Behältnissen und/oder Aufnahmevorrichtungen. Der Probeneingangsbereich kann beispielsweise für eine manuelle Ablage durch einen Bediener und/oder für eine Probenzufuhr über automatisierte Transportvorrichtungen (z.B. eine Rutsche oder ein Förderband) konfiguriert sein. Der Arbeitstisch weist präanalytische Vorrichtungen zur Behandlung von Proben vor deren Zuführen zu einem der Analysegeräte und postanalytische Vorrichtungen zur Lagerung und/oder Behandlung von Proben nach deren Entnahme aus einem der Analysegeräte auf. Die Analysegeräte sind derart ortsfest und beabstandet zu dem Arbeitstisch angeordnet, dass jeweils eine Gasse zwischen dem Arbeitstisch und jedem Analysegerät ausgebildet ist, wobei die Gassen derart breit sind, dass sich eine Bedienperson darin bewegen und dabei manuell Proben-Behältnisse und/oder Aufnahmevorrichtungen den Analysegeräten zuführen und/oder aus den Analysegeräten entnehmen kann. Der Handhabungsroboter ist nicht eingehaust und an oder auf dem Arbeitstisch montiert und weist einen Greifarm mit mindestens sechs Achsen auf. Der Handhabungsroboter weist einen Zugriffsbereich derart auf, dass er zum Zuführen von Proben-Behältnissen und/oder Aufnahmevorrichtungen zu den Analysegeräten und zur Entnahme von Proben-Behältnissen und/oder Aufnahmevorrichtungen aus den Analysegeräten die Gasse übergreifen kann. Eine erste Sensoranordnung ist derart angeordnet und ausgebildet, dass sie ein Eindringen einer Bedienperson oder eines anderen Objekts in den Zugriffsbereich des Handhabungsroboters außerhalb des Arbeitstisches erfassen und dies anzeigende Sensorsignale an eine Steuereinrichtung übermitteln kann. Die erste Sensoranordnung umfasst beispielsweise mehrere optische Sensoren oder Kameras und zugehörige Auswerteschaltungsanordnungen. Die Steuereinrichtung ist so konfiguriert, dass sie dann, wenn die Sensorsignale ein Eindringen einer Bedienperson oder eines anderen Objekts in den Zugriffsbereich außerhalb des Arbeitstisches anzeigen, den Handhabungsroboter derart ansteuert, dass sein Greifarm die Bewegung einstellt, solange die Bedienperson oder das Objekt den Zugriffsbereich nicht verlassen hat.

Diese erfindungsgemäße Labor-Anordnung gestattet einen höheren Durchsatz, weil aufgrund der Begehbarkeit der zwischen dem Arbeitstisch mit dem Handhabungsroboter und den Analysegeräten gebildeten breiteren Gasse freie Aufnahmekapazitäten der Analysegeräte durch eine parallele manuelle Eingabe durch einen Bediener während des laufenden Betriebs des Handhabungsroboters ausgenutzt werden können. Außerdem können aufgrund der Anordnung des Probeneingangsbereichs und der prä- und postanalytischen Vorrichtungen mit Hilfe des Handhabungsroboters prä- und postanalytische Aufgaben vollautomatisiert auf dem Arbeitstisch ausgeführt werden. Dies ermöglicht einen Dauerbetrieb der automatisierten Handhabung bei gleichzeitigem Erhalt der Möglichkeiten einer manuellen Bedienung und Probenbestückung und -entnahme an den Analysegeräten. Das Vorsehen eines mindestens sechsachsigen Handhabungsroboters erlaubt eine hohe Flexibilität der programmierbaren Zugriffsbewegungen, so dass der Handhabungsroboter einerseits die Gasse übergreifen und viele unterschiedliche Handhabungsbewegungen an den Analysegeräten vornehmen und andererseits auf dem Arbeitstisch viele prä- und postanalytische Aufgaben ausführen kann.

Eine bevorzugte Weiterbildung der Erfindung ist dadurch gekennzeichnet, dass eine mit der Steuereinrichtung gekoppelte zweite Sensoranordnung, vorzugsweise eine Bilderfassungssensoranordnung, derart angeordnet und angesteuert ist, dass sie erfasst, ob und an welchen Ablagepositionen Proben-Behältnisse in dem Probeneingangsbereich auf der Ablagefläche vorhanden sind und dass die Steuereinrichtung so konfiguriert ist, dass sie in Abhängigkeit von den Signalen der ersten Sensoranordnung und der zweiten Sensoranordnung die Entnahme der Proben-Behältnisse aus dem Probeneingangsbereich und deren weitere Handhabung mittels des Greifarms zur Vorbereitung und Durchführung der Analyse der Proben in den Analysegeräten steuert. Diese zweite Sensoranordnung umfasst beispielsweise wenigstens eine Kamera, mit der die Ablagefläche des Arbeitstisches überwacht wird. Diese Kamera kann fest im Raum montiert sein, beispielsweise in ausreichendem vertikalen Abstand über der Ablagefläche. Eine solche Kamera kann aber auch am Greifarm des Handhabungsroboters montiert sein, so dass die Kamera flexibel an interessierende Bereiche der Ablagefläche herangeführt werden kann. Das die Ablagefläche oder einen Ausschnitt derselben, insbesondere den Probeneingangsbereich, wiedergebende Kamerabild wird von der Steuereinrichtung ausgewertet, um die Ablage oder Entnahme von Proben-Behältnissen und Aufnahmevorrichtungen zu erfassen und in Abhängigkeit davon weitere Abläufe zu steuern. So kann beispielsweise die Ablage eingehender Proben-Behältnisse im Probeneingangsbereich erfasst werden, woraufhin deren prä-analytische Behandlung initiiert werden kann. Vorzugsweise werden mit der Kamera oder mit weiteren Kameras und Sensoren sämtliche Orte auf dem Arbeitstisch überwacht, an denen Proben-Behältnisse vorhanden sein können.

Eine besonders bevorzugte Weiterbildung dieser vorgenannten Ausführungsform ist dadurch gekennzeichnet, dass der Probeneingangsbereich einen separaten, markierten Notfallprobeneingangsbereich aufweist, der zur Ablage von Proben-Behältnissen und/oder Proben-Behältnisse aufnehmenden Aufnahmevorrichtungen für Proben vorgesehen ist, die einer vorrangigen Analyse bedürfen. Die Markierung, insbesondere optische Hervorhebung, des separaten Notfallprobeneingangsbereichs ermöglicht es einem Bediener, Notfall-Proben zur vorrangigen Analyse gezielt der Labor-Anordnung zu übergeben. Durch diese Weiterbildung der Erfindung wird auf einfache Weise eine vorrangige Behandlung der Notfallproben ermöglicht.

Bei einer bevorzugten einfachen Ausführungsform mit einem Handhabungsroboter deckt der Zugriffsbereich des Handhabungsroboters die gesamte Ablagefläche des Arbeitstisches ab.

Eine andere Weiterbildung der Erfindung ist dadurch gekennzeichnet, dass wenigstens ein weiterer Handhabungsroboter vorgesehen ist. Dies kann ein an die jeweiligen Aufgaben auf dem Arbeitstisch angepasster Roboter sein, der auch weniger als sechs Achsen aufweisen kann, sofern die eingeschränkte Bewegung für die zu erfüllenden Handling-Aufgaben ausreicht. Hierbei decken die Zugriffsbereiche der Handhabungsroboter, d.h. des die Gassen übergreifenden Handhabungsroboters und des wenigstens einen weiteren Handhabungsroboters, jeweils einen Teil der Ablagefläche des Arbeitstisches und die Zugriffsbereiche insgesamt die gesamte Ablagefläche des Arbeitstisches ab, wobei sich die Zugriffsbereiche der Handhabungsroboter in einem Überlappungsbereich auf der Ablagefläche des Arbeitstisches überlappen, so dass eine Übergabe von Proben-Behältnissen und/oder Aufnahmevorrichtungen zwischen den Handhabungsrobotern durch Ablage in dem Überlappungsbereich möglich ist. Der wenigstens eine weitere Handhabungsroboter ist vorzugsweise vorrangig für die Handhabung der eingehenden Proben-Behältnisse, einschließlich der Handhabung der Behältnisse bei präanalytischen Schritten, vorgesehen, während der vorgenannte Handhabungsroboter für die Übergabe der Proben-Behältnisse an die Analysegeräte über die Gasse hinweg sorgt. Dies gestattet eine weitere Durchsatzerhöhung. Sofern der weitere Handhabungsroboter so ausgebildet ist, dass er sich im Wesentlichen nicht über den Rand des Arbeitstischs hinaus bewegt, so ermöglicht diese Ausgestaltung ein Fortsetzen der Probenbehandlung auf dem Tisch, während der vorgenannte (erste) Handhabungsroboter seine Bewegungen stoppt, weil eine Bedienperson in dessen Zugriffsbereich eingetreten ist.

Jedes Analysegerät weist wenigstens eine Ablagevorrichtung zur Entgegennahme von Proben-Behältnissen und/oder Aufnahmevorrichtungen mit zu analysierenden Proben und zur Bereitstellung abzugebender Proben-Behältnisse und/oder Aufnahmevorrichtungen auf. Beispielsweise umfasst diese Ablagevorrichtung eine erste Ablagevorrichtung zum Aufnehmen von Proben-Behältnissen und/oder Aufnahmevorrichtungen mit zu analysierenden Proben und eine zweite Ablagevorrichtung, an der die Proben-Behältnissen und/oder Aufnahmevorrichtungen mit bereits untersuchten Proben oder leere Behältnisse ausgegeben werden. Hierbei ist eine Weiterbildung der Erfindung dadurch gekennzeichnet, dass der Ablagevorrichtung eine mit der Steuereinrichtung des Handhabungsroboters gekoppelte Anwesenheitssensoranordnung zum Erfassen der Anwesenheit der Proben-Behältnisse und/oder Aufnahmevorrichtungen zugeordnet ist, so dass die Steuereinrichtung des Handhabungsroboters das Zuführen von Proben-Behältnissen und/oder Aufnahmevorrichtungen zu den Analysegeräten und die Entnahme von Proben-Behältnissen und/oder Aufnahmevorrichtungen aus den Analysegeräten in Anhängigkeit von die Anwesenheit der Proben-Behältnisse und/oder Aufnahmevorrichtungen in den Ablagevorrichtungen anzeigenden Signalen der Anwesenheitssensoranordnung steuert. Vorzugsweise umfasst die Anwesenheitssensoranordnung wenigstens einen ersten Sensor zum Erfassen der Anwesenheit von in das Analysegerät einzuführender Proben-Behältnisse und/oder Aufnahmevorrichtungen und wenigstens einen zweiten Sensor zum Erfassen der Anwesenheit von aus dem Analysegerät ausgegebener Proben-Behältnisse und/oder Aufnahmevorrichtungen. Das Vorsehen dieser Anwesenheitssensoranordnung ermöglicht eine weitere Durchsatzerhöhung, weil die Zufuhr von Proben an die Analysegeräte an deren Bearbeitungszeit in den Analysegeräten angepasst werden kann. Darüber hinaus ist die Steuereinrichtung in der Lage, dann, wenn zunächst ein Proben-Behältnis und/oder eine Aufnahmevorrichtung (Tray) mit Proben-Behältnissen an einem Eingabeplatz eines Analysegeräts erfasst und das Behältnis beziehungsweise die Aufnahmevorrichtung danach, wenn es beziehungsweise sie in das Analysegerät eingezogen sein sollte, weiterhin an dem Eingabeplatz erfasst wird, eine Störung zu erkennen. Außerdem kann die Labor-Anordnung bei Ausfall eines Analysegeräts mit der oder den übrigen Analysegeräten weiterbetrieben werden. Schließlich gestattet die Anwesenheitssensoranordnung eine verbesserte Koordination mit der manuellen Eingabe und Entnahme von Proben-Behältnissen und/oder Aufnahmevorrichtungen in die Analysegeräte beziehungsweise aus den Analysegeräten durch einen Bediener.

Die in-vitro-diagnostische Labor-Anordnung weist vorzugsweise eine mit der Steuereinrichtung gekoppelte Identifikationsvorrichtung zum Erfassen von Identifikationsinformationen der Proben-Behältnisse auf, die eine auf dem Arbeitstisch angeordnete Sensorvorrichtung zum Lesen von auf den Proben-Behältnissen aufgebrachten Identifikationsinformationen aufweist. Bei einer bevorzugten Ausführungsform umfasst die Identifikationsvorrichtung eine Vorrichtung zum Erfassen von Eigenschaften von Verschlüssen der Proben-Behältnisse und/oder eine Vorrichtung zum Erfassen eines Füllstands oder eines Volumens der in den Proben-Behältnissen enthaltenen Proben. Auf diese Weise kann nicht nur die auf den Behältnissen aufgebrachte Identifikation **(z.B.** Barcode oder QR-Code) erfasst und geprüft werden; es ist auch eine Erfassung von Farbe und Form der Verschlüsse **(z.B.** Behältnis-Kappen) und deren Prüfung sowie eine Prüfung des Füllstands innerhalb der Behältnisse (z.B. Röhrchen) möglich und somit eine Fehlererkennung. Diese Ausführungsform hat ferner den Vorteil, dass alle für die weitere Probenbehandlung erforderlichen Informationen an einem Ort auf dem Arbeitstisch und somit in kurzer Zeit, insbesondere ohne weitere Transporte durch den Greifarm des Handhabungsroboters, erfasst werden können.

Die in-vitro-diagnostische Labor-Anordnung ist vorzugsweise dadurch gekennzeichnet, dass die Ablagefläche des Arbeitstisches Bereiche zur Ablage von Reagenzien enthaltenden Behältnissen und/oder von solche Behältnisse enthaltenden Aufnahmevorrichtungen aufweist, die von dem Handhabungsroboter den Analysegeräten zugeführt werden können. Dies gestattet eine vollautomatisierte Bereitstellung der Reagenzien für die Analysegeräte und vermeidet Unterbrechungen des Betriebs bei Abwesenheit der Bediener.

Vorzugsweise weisen die präanalytischen Vorrichtungen des Arbeitstischs auf der Ablagefläche einen Pufferbereich zur Ablage von den Analysegeräten zuzuführenden Proben-Behältnissen und/oder Proben-Behältnisse aufnehmenden Aufnahmevorrichtungen auf, wobei die den Analysegeräten zuzuführenden Proben-Behältnisse und/oder die Proben-Behältnisse aufnehmenden Aufnahmevorrichtungen so ausgestaltet sind, dass sie an die Analysegeräte angepasst sind. Im Rahmen der präanalytischen Probenbehandlung können die Proben-Behältnisse vollautomatisiert in die an die Analysegeräte angepassten Aufnahmevorrichtungen (zum Beispiel Trays) umgelagert werden.

Bei einer Ausführungsform der in-vitro-diagnostischen Labor-Anordnung umfassen die Proben Untersuchungsmaterialproben und Kontrollproben. Hierbei weisen die präanalytischen Vorrichtungen des Arbeitstischs eine eine Kühlvorrichtung aufweisende Aufnahmevorrichtung zur Aufnahme von Kontrollproben enthaltenden Proben-Behältnissen auf. So können die in der wenigstens einen Aufnahmevorrichtung gelagerten Kontrollproben in wenigstens einem vorgegebenen Temperaturbereich gekühlt gelagert werden. Das Vorhalten von Kontrollproben in gekühlten Bereichen des Tisches des Handhabungsroboters gestattet einen Dauerbetrieb der Labor-Anordnung und die automatische Zwischenschaltung regelmäßiger Kontrollanalysen ohne Betriebsunterbrechung und somit wiederum einen höheren Gesamtdurchsatz.

Vorzugsweise ist die in-vitro-diagnostische Labor-Anordnung dadurch gekennzeichnet, dass die präanalytischen Vorrichtungen des Arbeitstischs eine von dem Greifarm bedienbare und/oder eine autonom arbeitende Pipettierstation umfassen, die auf der Ablagefläche des Arbeitstisches angeordnet ist. Die Pipettierstation erweitert die Möglichkeiten der präanalytischen Probenbehandlung. So können von eingehenden Proben Teilproben (Aliquots) hergestellt werden, die dann parallel oder nacheinander unterschiedlichen Analysen zugeführt werden können. Bei einer bevorzugten Weiterbildung umfassen die präanalytischen Vorrichtungen des Arbeitstischs auf der Ablagefläche eine eine Kühlvorrichtung aufweisende Aufnahmevorrichtung zur Aufnahme von mittels der Pipettierstation befüllten Proben-Behältnissen. Diese Kühlmöglichkeit erweitert die Möglichkeiten der Analyse der hergestellten Aliquots.

Eine Weiterbildung der in-vitro-diagnostischen Labor-Anordnung ist dadurch gekennzeichnet, dass die präanalytischen Vorrichtungen des Arbeitstischs eine Vorrichtung zum Entfernen von Verschlüssen von den Proben-Behältnissen umfassen, wobei die Vorrichtung zum Entfernen von Verschlüssen vorzugsweise von dem Greifarm bedienbar ist. Auch dies erweitert die Möglichkeiten der Prä-Analytik und gestattet die Entnahme von Proben oder Anteilen der Proben und deren Aufteilung in Teilproben.

Bei einer anderen bevorzugten Ausführungsform der in-vitro-diagnostischen Labor-Anordnung umfassen die präanalytischen Vorrichtungen des Arbeitstischs eine Zentrifuge und weist die Ablagefläche des Arbeitstisches einen Bereich zur Ablage von Zentrifugen-Probenträgern auf.

Ferner ist vorzugsweise auf der Ablagefläche des Arbeitstisches eine eine Kühlvorrichtung aufweisende Aufnahmevorrichtung zur Aufnahme von an eine externe Labor-Anordnung auszugebenden Untersuchungsmaterialproben angeordnet. So können die in der Aufnahmevorrichtung gelagerten Untersuchungsmaterialproben in einem vorgegebenen Temperaturbereich gekühlt gelagert werden. Bei dieser bevorzugten Ausführungsform können Untersuchungsmaterialproben, die nach einer präanalytischen Behandlung an eine externe Labor-Anordnung auszugeben sind (weil sie nicht von den Analysegeräten der Labor-Anordnung analysiert werden können), für eine verlängerte Dauer gelagert werden, was eine gesammelte Ausgabe ermöglicht und somit zu weniger Unterbrechungen der Betriebsabläufe führt und ebenfalls den Gesamtdurchsatz erhöht.

Bei einer bevorzugten Ausführungsform der in-vitro-diagnostischen Labor-Anordnung umfassen die postanalytischen Vorrichtungen des Arbeitstisches einen Lagerbereich mit einer eine Kühlvorrichtung aufweisenden Aufnahmevorrichtung zum Aufbewahren von aus den Analysegeräten entnommenen Proben-Behältnissen.

Bei einer besonders bevorzugten Ausführungsform der in-vitro-diagnostischen Labor-Anordnung umfassen die postanalytischen Vorrichtungen des Arbeitstisches eine Vorrichtung zum Wieder-Aufsetzen von Verschlüssen auf die Proben-Behältnisse, wobei die Vorrichtung zum Wieder-Aufsetzen von Verschlüssen vorzugsweise von dem Greifarm bedienbar ist. Bei dieser Ausführungsform der in-vitro-diagnostischen Labor-Anordnung kann beispielsweise die Vorrichtung zum Wieder-Aufsetzen von Verschlüssen auf die Behältnisse an einem der Greifarme befestigt und mit diesem zu in einer Haltevorrichtung zum Halten von Behältnissen bewegt werden, wobei die Haltevorrichtung auf dem Tisch angeordnet ist. Auch dies erweitert die Möglichkeiten der Post-Analytik und unterstützt die Aufteilung von Proben in Teilproben und die Lagerung der Teilproben in verschlossenen Proben-Behältnissen.

Eine Weiterbildung der in-vitro-diagnostischen Labor-Anordnung ist dadurch gekennzeichnet, dass die erste Sensoranordnung so konfiguriert ist, dass sie zusätzlich eine Annäherung einer Bedienperson oder eines anderen Objekts an den Zugriffsbereich des Handhabungsroboters erfassen und dies anzeigende Sensorsignale an die Steuereinrichtung übermitteln kann, wobei die Steuereinrichtung dann, wenn die Sensorsignale ein vorgegebenes Maß der Annäherung einer Bedienperson oder eines anderen Objekts an den Zugriffsbereich, aber noch kein Eindringen in den Zugriffsbereich anzeigen, den Handhabungsroboter derart ansteuert, dass er die Bewegung des Greifarms verlangsamt, bis sich die Bedienperson oder das Objekt wieder um einen vorgegebenen Mindestabstand von dem Zugriffsbereich entfernt hat. Auch dies sorgt für eine höhere Betriebssicherheit und gestattet ein schnelleres Abbremsen der Bewegung des Greifarms, sobald sich die Bedienperson in den Zugriffsbereich hineinbewegt.

Bei weiteren Ausführungsformen der in-vitro-diagnostischen Labor-Anordnung kann der Arbeitstisch weitere Vorrichtungen auf und/oder unter der Oberfläche des Tisches aufweisen, wie beispielsweise
- eine Greifer-Wechselstation, in der Greifer-Werkzeuge für unterschiedliche Funktionen, wie dem Greifen unterschiedlicher Behältnisse oder Aufnahmevorrichtungen, dem Abschrauben von Kappen oder dem Pipettieren, gelagert, an einem Greifarm befestigt oder von dem Greifarm wieder abgenommen werden können,
   und/oder
- eine Etikettier- und/oder Druckstation, mit deren Hilfe Proben-Behältnisse mit geänderten oder neuen Identifikationsinformationen versehenen werden können.

Die erfindungsgemäße in-vitro-diagnostische Labor-Anordnung ist vorzugsweise dadurch gekennzeichnet, dass der Handhabungsroboter so ausgebildet ist, dass er eine Geschwindigkeit vom mindestens 4 m/s, vorzugsweise mehr als 6 m/s, erreichen kann. Vorzugsweise ist der Handhabungsroboter ein seriell-kinematischer Roboter. Der Nachteil der gegebenenfalls für die höhere Geschwindigkeit und somit Beschleunigung erforderlichen stabileren Ausführung der Glieder und Gelenke des Greifarms und des damit verbundenen höheren Gewichts des Handhabungsroboters wird durch die Vorteile, insbesondere des höheren Durchsatzes, mehr als ausgeglichen.

Eine bevorzugte Ausführungsform der in-vitro-diagnostischen Labor-Anordnung ist dadurch gekennzeichnet, dass der Handhabungsroboter auf dem Arbeitstisch montiert ist und eine Kabelzuführung aufweist, die durch den Arbeitstisch von unten in den Greifarm geführt ist. Dies vermeidet eine aufwendige Kabelführung von der Decke des Raumes hinab zu dem sich bewegenden Greifarm.

Die eingangs genannte Aufgabe der Erfindung wird ferner durch ein Verfahren mit den Merkmalen des Anspruchs 14 zum Betreiben einer in-vitro-diagnostischen Labor-Anordnung mit dem Merkmalen der Ansprüche 2 oder 3 gelöst.

Bei dieser in-vitro-diagnostischen Labor-Anordnung mit wenigstens zwei Analysegeräten, einem Handhabungsroboter und einem Arbeitstisch zur Prä- und Postanalytik der oben genannten Art wird eine mit der Steuereinrichtung gekoppelte zweite Sensoranordnung, vorzugsweise eine Bilderfassungssensoranordnung, derart angeordnet und angesteuert, dass sie erfasst, ob und an welchen Ablagepositionen Proben-Behältnisse in dem Probeneingangsbereich auf der Ablagefläche vorhanden sind und ist die Steuereinrichtung so konfiguriert, dass sie in Abhängigkeit von den Signalen der ersten Sensoranordnung und der zweiten Sensoranordnung die Entnahme der Proben-Behältnisse aus dem Probeneingangsbereich und deren weitere Handhabung mittels des Greifarms zur Vorbereitung und Durchführung der Analyse der Proben in den Analysegeräten steuert. Erfindungsgemäß wird bei dem Verfahren zum Betreiben dieser in-vitro-diagnostischen Labor-Anordnung in einem Schritt a) von der Steuereinrichtung mit Hilfe der ersten Sensoranordnung das Eindringen einer Bedienperson in den Zugriffsbereich des Greifarms des Handhabungsroboters erfasst. Daraufhin wird der Handhabungsroboter von der Steuereinrichtung veranlasst, die Bewegung des Greifarms einzustellen. Anschließend wird in einem Schritt b) von der Steuereinrichtung mit Hilfe der ersten Sensoranordnung erfasst, dass die Bedienperson den Zugriffsbereich wieder verlassen hat. Von der Steuereinrichtung wird in einem Schritt c) mit Hilfe der zweiten Sensoranordnung erfasst, ob sich wenigstens ein Probenbehältnis an einer Ablageposition in dem Probeneingangsbereich befindet, die vor dem Eindringen der Bedienperson in den Zugriffsbereich unbelegt war. Dieses Schritt c) kann ausgeführt werden, nachdem die Bedienperson den Zugriffsbereich verlassen hat, kann aber auch bereits zuvor beginnen. Wenn sich wenigstens ein Probenbehältnis an einer Ablageposition in dem Probeneingangsbereich befindet, die vor dem Eindringen der Bedienperson in den Zugriffsbereich unbelegt war, wird im einem Schritt c1) der Handhabungsroboter von der Steuereinrichtung veranlasst, mittels des Greifarms das wenigstens eine Proben-Behältnis aus dem Probeneingangsbereich zu entnehmen, werden in einem Schritt c2) Identifikationsinformationen des wenigstens einen Proben-Behältnisses erfasst, wird in einem Schritt c3) der Handhabungsroboter von der Steuereinrichtung veranlasst, mittels des Greifarms das wenigstens eine Proben-Behältnis in eine Aufnahmevorrichtung zur Eingabe in eines der Analysegeräte einzusetzen, und wird in einem Schritt c4) der Handhabungsroboter von der Steuereinrichtung veranlasst, mittels des Greifarms das Proben-Behältnis in der Aufnahmevorrichtung einem Analysegerät zur Analyse der enthaltenen Probe zuzuführen.

Bei einer bevorzugten Ausführungsform des Verfahrens werden in dem Schritt c2) zusätzlich der Füllstand und/oder die Farbe des Proben-Verschlusses und/oder eine andere Eigenschaft des wenigstens einen Proben-Behältnisses erfasst.

Eine bevorzugte Weiterbildung des Verfahrens ist dadurch gekennzeichnet, dass dann, wenn im Schritt c2) keine oder fehlerhafte Identifikationsinformationen und/oder Eigenschaften erfasst werden, der Handhabungsroboter von der Steuereinrichtung veranlasst wird, mittels des Greifarms das wenigstens eine Proben-Behältnis in eine Aufnahmevorrichtung für fehlerhafte Proben-Behältnisse auf dem Arbeitstisch abzulegen.

Vorzugsweise weist der Probeneingangsbereich der in-vitro-diagnostischen Labor-Anordnung einen separaten, markierten Notfallprobeneingangsbereich auf, der zur Ablage von Proben-Behältnissen und/oder Proben-Behältnisse aufnehmenden Aufnahmevorrichtungen für Proben vorgesehen ist, die einer vorrangigen Analyse bedürfen. Das Verfahren zum Betreiben dieser bevorzugten Ausführungsform der Labor-Anordnung ist vorzugsweise dadurch gekennzeichnet, dass dann, wenn im Schritt c) von der Steuereinrichtung mit Hilfe der zweiten Sensoranordnung erfasst wird, dass sich wenigstens ein Proben-Behältnis an einer Ablageposition in dem Notfallprobeneingangsbereich befindet, die Schritte c1) bis c4) für dieses wenigstens eine Proben-Behältnis mit Vorrang gegenüber der Behandlung sämtlicher anderer Proben-Behältnisse ausgeführt werden.

Vorteilhafte und/oder bevorzugte Weiterbildungen der Erfindung sind in den Unteransprüchen gekennzeichnet.

Nachfolgend wird die Erfindung anhand eines in den Zeichnungen dargestellten bevorzugten Ausführungsbeispiels näher beschrieben, wobei in den Zeichnungen
Figur 1 eine schematische Draufsicht auf das bevorzugte Ausführungsbeispiel der in-vitro-diagnostischen Labor-Anordnung und
Figur 2 eine schematische Seitenansicht des Handhabungsroboters der in-vitro-diagnostischen Labor-Anordnung gemäß Figur 1 zeigt.

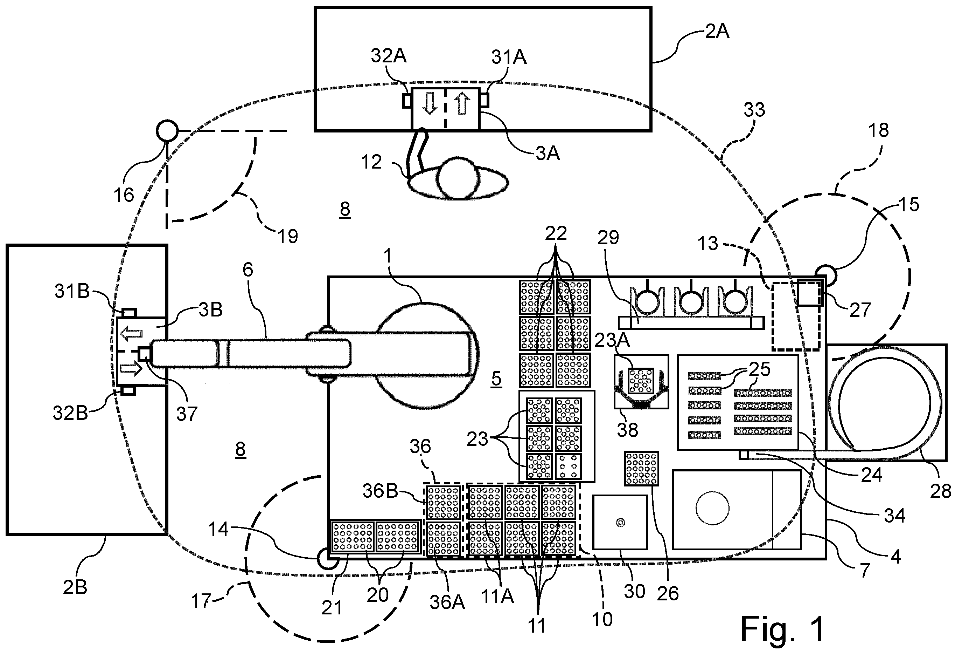

Die in Figur 1 schematisch gezeigte erfindungsgemäße in-vitro-diagnostischen Labor-Anordnung umfasst beispielsweise zwei Analysegeräte 2A und 2B und einen Arbeitstisch 4 mit einem Handhabungsroboter 1 und einer Steuereinrichtung 13. Bei anderen Ausführungsformen können auch drei oder mehr Analysegeräte vorgesehen sein. Der Handhabungsroboter 1 ist auf dem Arbeitstisch 4 befestigt und weist einen Greifarm 6 auf. Eine Kabelzuführung ist durch den Arbeitstisch 4 von unten in den Greifarm 6 geführt. Der Arbeitstisch 4, der Handhabungsroboter 1 und die Analysegeräte 2A, 2B sind ortsfest in vorgegebenem Abstand zueinander derart angeordnet, dass jeweils eine begehbare Gasse 8 zwischen dem Tisch 4 mit dem Roboter 1 und den Analysegeräten 2A, 2B verbleibt. Diese Gasse 8 ermöglicht einem Bediener 12 den Zugriff auf die Analysegeräte 2A, 2B. Bei den Analysegeräten 2A, 2B handelt es sich beispielsweise um Geräte für die Analysen im Bereich der Immunologie und klinischen Chemie, Geräte für die Hämatologie-Diagnostik und/oder Geräte für eine Gerinnungsanalytik, die von unterschiedlichen Herstellern zur Verfügung gestellt werden.

Der Arbeitstisch 4 weist eine ebene Ablagefläche 5 auf, wobei die Höhe, in der die Ablagefläche 5 des Tischs 4 angeordnet ist, der üblichen Arbeitshöhe von Labortischen entspricht und vorzugsweise zwischen 80 cm und 110 cm liegt. Die Ablagefläche 5 kann alternativ auch in zwei oder mehr beabstandete Teilflächen unterteilt sein. Auf dem Tisch 4 sind mehrere prä- und postanalytische Vorrichtungen angeordnet. Die horizontale Ausdehnung des Tisches 4 kann in Abhängigkeit von der Anzahl der zugeordneten Analysegeräte und der auf dem Tisch angeordneten prä- und postanalytischen Vorrichtungen variieren.

Ein Greifarm 6 weist infolge seiner Positionierung, seines Schwenkbereichs und der Länge seiner Glieder einen Zugriffsbereich 33 derart auf, dass er zur Übergabe von Proben-Behältnissen an die Analysegeräte 2A und 2B beziehungsweise Entgegennahme von den Analysegeräten 2A und 2B die Gasse 8 übergreifen kann. In dem Zugriffsbereich 33 befinden sich somit die Ablagen 3A und 3B der Analysegeräte 2A und 2B zur Übernahme und Übergabe der Proben-Behältnisse. Bei größeren Ausführungsformen können auch mehrere Greifarme 6 vorgesehen sein, die denselben oder unterschiedlichen Analysegeräten zugeordnet sein können. Die Zugriffsbereiche der mehreren Greifarme 6 bilden dann zusammen den Zugriffsbereich 33.

Bei der bevorzugten Ausführungsform der in-vitro-diagnostischen Labor-Anordnung ist ein sechs-achsiger, vorzugsweise seriell-kinematischer Handhabungsroboter 1 so ausgebildet, dass er am Greifer oder Werkzeug eine Geschwindigkeit vom mindestens 4 m/s, vorzugsweise mehr als 6 m/s, erreichen kann. Er weist vorzugsweise eine Wiederholgenauigkeit von mindestens 0,05 mm, vorzugsweise mindestens 0,03 mm auf, was den kollisionsbedingten Verschleiß verringert.

Die in Figur 1 schematisch dargestellten Ablagen 3A, 3B der Analysegeräte 2A, 2B dienen einerseits der Aufnahme von in Aufnahmevorrichtungen (Racks) gelagerten Proben-Behältnissen mit zu analysierenden Proben vor deren Transport in das Analysegerät und andererseits der Bereitstellung von in Aufnahmevorrichtungen (Racks) gelagerten Proben-Behältnissen nach der Analyse der Proben und der Ausgabe aus dem Analysegerät. Diese zwei Funktionen sind in Figur 1 durch zwei in unterschiedliche Richtungen zeigende Pfeile auf den Ablageflächen 3A und 3B dargestellt. Die Ablagen 3A, 3B können auch in räumlich getrennte Ablagen aufgeteilt sein, nämlich eine oder mehrere erste Ablagen zur Entgegennahme von Proben-Behältnissen mit zu analysierenden Proben und eine oder mehrere zweite Ablagen zur Bereitstellung abzugebender Proben-Behältnisse nach der Analyse.

Bei dem bevorzugten Ausführungsbeispiel der erfindungsgemäßen in-vitro diagnostischen Labor-Anordnung ist den Ablagen 3A, 3B eine mit der Steuereinrichtung 13 des Handhabungsroboters 1 gekoppelte Anwesenheitssensoranordnung zum Erfassen der Anwesenheit der Proben-Behältnisse und/oder Aufnahmevorrichtungen zugeordnet. Bei dem in Figur 1 dargestellten Ausführungsbeispiel erfasst jeweils ein erster Anwesenheitssensor 31A, 31B die Anwesenheit der in das Analysegerät einzugebenden Proben-Behältnisse und jeweils ein zweiter Anwesenheitssensor 32A, 32B die Anwesenheit der von dem Analysegerät ausgegebenen Proben-Behältnisse. Bei den Sensoren handelt es beispielsweise um Annäherungssensoren, Lichtschranken oder Kameras mit zugehöriger Auswerteelektronik und Vorrichtungen für eine - vorzugsweise drahtlose - Kommunikation mit der Steuereinrichtung 13 des Arbeitstisches 4. Somit kann die Steuereinrichtung 13 das Zuführen von Proben-Behältnissen zu den Analysegeräten 2A, 2B und die Entnahme von Proben-Behältnissen aus den Analysegeräten 2A, 2B in Anhängigkeit von die Anwesenheit der Proben-Behältnisse anzeigenden Signalen der Anwesenheitssensoren 31A, 32A, 31B, 31B steuern. Somit können die Analysegeräte 2A, 2B unmittelbar dann entladen und neu beladen werden, wenn die Proben analysiert und die Proben-Behältnisse ausgegeben worden sind. Dies erhöht den Gesamtdurchsatz. Außerdem ermöglichen diese Anwesenheitssensoren 31A, 32A, 31B, 31B ein besseres Erkennen von Fehlern und Ausfällen der Analysegeräte 2A, 2B.

Die Ablagefläche 5 des Tisches 4 dient zur Ablage von Behältnissen, insbesondere Röhrchen, die Proben oder Reagenzien enthalten. Diese Behältnisse befinden sich üblicherweise in unterschiedlichen Aufnahmevorrichtungen, die als Probenträger, Trays oder Racks bezeichnet werden. So können beispielsweise mehrere (beispielsweise 5 oder 10) den Analysegeräten 2A oder 2B zuzuführende Proben-Behältnisse in Trays 25 oder Racks mit jeweils einer entsprechenden Anzahl (beispielsweise 5 oder 10) von Aufnahmen eingesetzt werden. Es gibt auch Analysegeräte, denen die Proben-Behältnisse in mehreren Racks zugeführt werden, wobei die mehreren Racks wiederum in einen sogenannten Racktray eingesetzt und gemeinsam zugeführt werden. Die Ablagefläche 5 des Tisches 4 umfasst einen Bereich 24 zur Ablage der in die Analysegeräte 2A und 2B einsetzbaren Probenträger 25 (z.B. Trays). Der Bereich 24 liegt im Zugriffsbereich 33 des Greifarms 6 des die Gasse 8 übergreifenden Handhabungsroboters 1. Der Greifarm 6 kann die Probenträger 25 im Bereich 24 aufnehmen und einer Ablage 3A oder 3B eines der Analysegeräte 2A oder 2B zuführen.

Die Ablagefläche 5 des Tisches 4 umfasst einen Probeneingangsbereich 10, in dem Proben-Behältnisse und insbesondere Proben-Behältnisse enthaltende Aufnahmevorrichtungen 11 (d. h. Probenträger, Trays oder Racks) abgelegt werden, welche zu analysierende Proben enthalten. Diese neu eingehenden Behältnisse oder Probenträger 11 mit zu analysierenden Proben können beispielsweise manuell von einer Bedienperson 12 in dem Probeneingangsbereich 10 abgelegt werden. In diesem Fall befindet sich der Probeneingangsbereich 10 vorzugsweise an einem Außenrand der Ablagefläche 5 des Tisches 4 an einer von den Analysegeräten 2A und 2B abgewandten Seite. Bei anderen Ausführungsformen ist es auch denkbar, dass der Transport der eingehenden Proben-Behältnisse zu dem Probeneingangsbereich 10 durch eine Fördervorrichtung (beispielsweise eine Rutsche, ein Förderband oder ein Roboterarm) erfolgt, so dass die Bedienperson 12 nicht an den Arbeitstisch 4 heranzutreten braucht. Die in dem Probeneingangsbereich 10 abzustellenden Probenträger 11 können eine vorgegebene Anzahl von Proben-Behältnissen aufnehmen und weisen beispielsweise 25 in einer Matrix von fünf Zeilen und fünf Spalten angeordnete Aufnahmen auf. Bei dem in Figur 1 schematisch dargestellten Ausführungsbeispiel umfasst der Probeneingangsbereich 10 einen Teilbereich zur Aufnahme von Probenträgern 11A für Notfall-Proben, welche bevorzugt zu analysieren sind.

Der Probeneingangsbereich 10 könnte auch zusätzlich eine Vorrichtung (einen sogenannten Schüttgut-Sortierer) enthalten, die aus einem Container, der eine Vielzahl von Proben-Behältnissen unsortiert enthält, Proben-Behältnisse entnimmt, deren Identifikationsinformationen erfasst und die Proben-Behältnisse in Aufnahmeeinrichtungen (Probenträger) einsortiert.

Der Probeneingangsbereich 10 befindet sich im Zugriffsbereich 33 des Greifarms 6. Der Greifarm 6 dient somit auch der prä-analytischen Handhabung eingehender Proben-Behältnisse, insbesondere dem Entnehmen der Proben-Behältnisse aus den Probenträgern 11, 11A des Probeneingangsbereichs 10, dem Identifizieren der eingehenden Proben-Behältnisse und dem Einsetzen der Proben-Behältnisse in die Probenträger 25 im Bereich 24 für die Beladung der Analysegeräte 2A und 2B.

Das Identifizieren der eingehenden Proben-Behältnisse umfasst beispielsweise das Scannen eines auf der Oberfläche der Proben-Behältnisse aufgebrachten Barcodes oder auch einer anderen Identifikation (z. B. eines QR-Codes). Zum Scannen ergreift der Greifarm 6 ein zu identifizierendes Proben-Behältnis und bringt es in den Scanbereich einer Scanstation 7. Die von der Scanstation 7 erfasste Identifikation wird anschließend überprüft. Die Scanstation kann vorzugsweise zusätzlich zum Identifizieren ein Erkennen eines Füllstands einer Probenflüssigkeit in einem Proben-Behältnis (beispielsweise Röhrchen) und/oder ein Erfassen äußerer Erscheinungsmerkmale des Proben-Behältnisses, wie beispielsweise der Farbe seiner Kappe, übernehmen. Die so aus dem Barcode (oder anderem Code), der Füllstandserfassung und/oder der Erfassung der äußeren Merkmale des Behältnisses gewonnenen Informationen werden beispielsweise mit in einer Datenbank hinterlegten Informationen verglichen. Bei dieser Auswertung der gewonnenen Informationen können fehlerhafte Proben erkannt werden. Außerdem kann geprüft werden, ob für die der Identifikationsinformation entsprechende Probe bereits ein Analyse-Auftrag vorliegt und ob der Auftrag durch die vorhandenen Analysegeräte erledigt werden kann. Die Ablagefläche 5 umfasst einen Fehlerbereich 36 mit einer Aufnahmevorrichtung 36A für Proben enthaltende Behältnisse, für die (noch) kein Auftrag vorliegt, sowie Aufnahmevorrichtungen 36B für fehlerhafte Proben, beispielsweise unzureichend gefüllte Behältnisse oder Behältnisse, bei denen das äußere Erscheinungsbild (z. B. die Kappenfarbe) nicht mit den aus der Identifikationsinformation abgeleiteten Probeninformationen übereinstimmt.

Die Scanstation 7 umfasst ferner Vorrichtungen zum Entfernen eines Verschlusses der Proben-Behältnisse (sogenannte Decap-Vorrichtung). Damit können die eingehenden Proben an einem Ort identifiziert, vermessen, geprüft und zur Entnahme der Probe oder eines Teils der Probe vorbereitet werden.

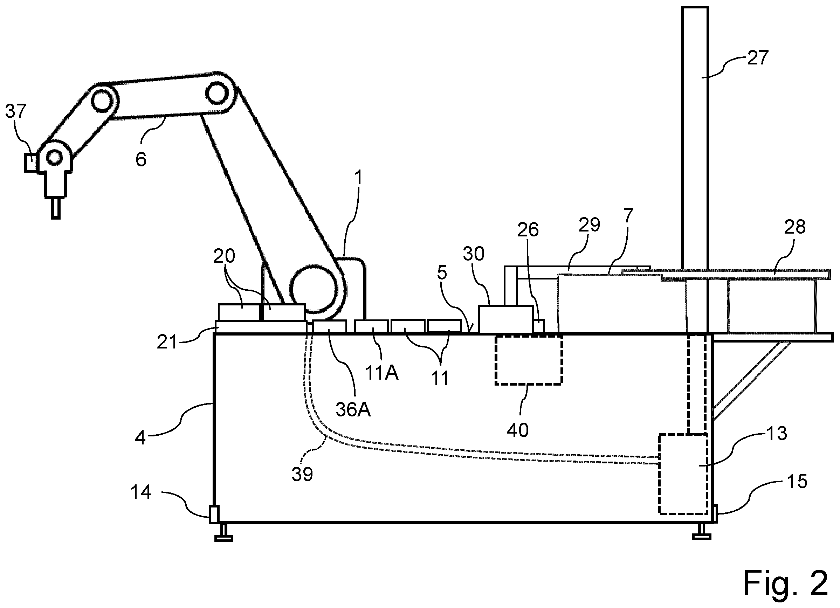

Figur 2 zeigt eine schematische Seitenansicht des in Figur 1 dargestellten Arbeitstisches 4 mit dem Handhabungsroboter 1 mit dem Greifarm 6 sowie einigen auf und in dem Tisch 4 angeordneten Vorrichtungen. Die Analysegeräte sind in Figur 2 nicht dargestellt.

Bei dem in den Figuren 1 und 2 dargestellten bevorzugten Ausführungsbeispiel umfasst der Arbeitstisch 4 weitere Vorrichtungen, die einer Vorbehandlung (Prä-Analytik) eingehender Proben vor der Zufuhr zu einem Analysegerät 2A, 2B und der Nachbehandlung (Post-Analytik) analysierter Proben nach deren Entnahme aus den Analysegeräten 2A, 2B dienen.

Die der Prä-Analytik dienenden Vorrichtungen umfassen eine Zentrifuge 40, die im Tisch 4 unter der Ablagefläche 5 angeordnet und mittels Strichlinie in Figur 2 schematisch dargestellt ist. In Figur 1 ist schematisch eine Aufnahme 38 der Untertisch-Zentrifuge 40 gezeigt, in die ein Zentrifugen-Probenträger 23A, d. h. eine Aufnahmevorrichtung für zu zentrifugierende Proben-Behältnisse, eingeführt werden kann. Ferner befindet sich auf der Ablagefläche 5 ein Bereich zur Ablage von Zentrifugen-Probenträgern 23, die von dem Greifarm 6 mit Proben-Behältnissen bestückt werden können.

Damit der Greifarm 6 die unterschiedlichen Funktionen ausführen kann, ist die Bereitstellung verschiedener Greif-Werkzeuge an einer Greifer-Wechselstation 29 vorgesehen. Hier werden Greif-Werkzeuge für die unterschiedlichen Funktionen, wie beispielsweise das Ergreifen der Proben-Behältnisse, das Entfernen einer Kappe oder das Pipettieren bereitgestellt. Die Greifer-Wechselstation gestattet das automatische Wechseln der verschiedenen Greif-Werkzeuge.

Die Ablagefläche 5 des Tisches 4 umfasst ferner einen Bereich, in dem Aufnahmevorrichtungen 20 (Probenträger) für Kontrollproben abgelegt werden können. Dieser Bereich umfasst ferner eine Kühlvorrichtung 21, die es ermöglicht, die Kontrollproben in einem vorgegebenen Temperaturbereich gekühlt zu lagern. Dies ermöglicht es dem Handhabungsroboter 1, den Analysegeräten 2A und 2B in vorgegebenen Intervallen Kontrollproben zuzuführen und diese Kontrollproben für einen längeren Zeitraum vorzuhalten, so dass in diesem Zeitraum kein Zuführen frischer Kontrollproben in den Probeneingangsbereich 10, d. h. kein Eingriff eines Bedieners 12 erforderlich ist.

Ferner sind auf der Ablagefläche 5 des Tisches 4 ein oder mehrere Puffer-Aufnahmevorrichtungen 26 vorgesehen, in denen Proben-Behältnisse vorübergehend abgelegt werden können, während der Greifarm 6 andere Aufgaben ausführt.

Die Ablagefläche 5 umfasst ferner einen Probenausgangsbereich, in dem Aufnahmevorrichtungen 22 für Proben-Behältnisse angeordnet sind. Der Probenausgangsbereich umfasst einen gekühlten Bereich mit einer Kühlvorrichtung und einen ungekühlten Bereich. Die Aufnahmevorrichtungen 22 im gekühlten Bereich können zur Aufnahme von Proben-Behältnissen mit Untersuchungsmaterial-Proben dienen, die an eine externe Labor-Anordnung ausgegeben werden sollen, d. h. bei denen die gewünschte Analyse nicht mit den vorhandenen Analysegeräten 2A und 2B ausführbar ist. Darüber hinaus können in den Aufnahmevorrichtungen 22 des Probenausgangsbereich Proben-Behältnisse abgelegt werden, bei denen bereits die erforderlichen Analysen durchgeführt worden sind.

Mit Hilfe des Handhabungsroboters 1 kann somit auch eine Handhabung von Proben-Behältnissen durchgeführt werden, die sich an die durchgeführte Analytik anschließt (sogenannte Post-Analytik). Diese umfasst beispielsweise das Wieder-Verkappen von Proben-Behältnissen. Zu diesem Zweck befindet sich auf der Ablagefläche Vorrichtungen zum Wiederverschließen (Verkappen) von Proben-Behältnissen, die bei dem in Figur 1 dargestellten Ausführungsbeispiel eine Vorrichtung 30 zum Aufsetzen von Kappen und eine Vorrichtung 28 zum Bereitstellen aufzusetzender Kappen (einen sogenannten Bowlfeeder) mit einer Verlängerungsschiene 34 zum Transportieren der Kappen aus dem Bowlfeeder 28 in der Zugriffsbereich 33 des Greifarms 6 umfasst.

Die Steuereinrichtung 13 ist beispielsweise unter dem Tisch 4 des Handhabungsroboters 1 angeordnet, wie dies in Figur 1 und Figur 2 durch eine Strichlinie dargestellt ist. Die Steuereinrichtung 13 umfasst einen oder mehrere Computer und ist über eine Kabelzuführung 39 und angepasste Schnittstellen mit (nicht in den Figuren dargestellten) Vorrichtungen zum Ansteuern des Greifarms 6 sowie mit der Scanstation 7 und den (ebenfalls nicht dargestellten) Vorrichtungen zur Füllstandserfassung und zum Erfassen der äußeren Merkmale eines Proben-Röhrchens (z. B. Kappenfarbe) gekoppelt. Darüber hinaus ist die Steuereinrichtung 13 (beispielsweise über eine Drahtlos-Kommunikationsverbindung) mit den Anwesenheitssensoranordnungen 31A, 31B, 32A, 32B der Analysegeräte 2A, 2B sowie mit wenigstens einem Bediener-Terminal gekoppelt, das eine Anzeigevorrichtung (z.B. einen Bildschirm oder Touchscreen) und übliche Eingabevorrichtungen (Tastatur, Maus, Spracheingabevorrichtungen, etc.) umfasst. Die Steuereinrichtung 13, die eines oder mehrere Computersysteme umfasst, ist zudem in ein Datenkommunikationsnetzwerk eingebunden, über das sie mit weiteren Datenverarbeitungsanlagen des Labors gekoppelt sein kann. Die Steuereinrichtung 13 ist darüber hinaus mit einem zur Laborraum-Decke geführten Kabelkanal 27 verbunden, durch den Spannungsversorgungs- und Kommunikationsleitungen hindurch geführt sind.

Die Steuereinrichtung 13 ist mit weiteren auf und unter dem Tisch angeordneten Vorrichtungen, wie beispielsweise der Zentrifuge, und einer Reihe von (nicht in der Zeichnung dargestellten) Sensoreinrichtungen gekoppelt, die den verschiedenen Bereichen der Ablagefläche 5, wie beispielsweise dem Probeneingangsbereich 10, dem Bereich 24, den Aufnahmevorrichtungen 20 für Kontrollproben und dem Fehlerbereich 36, zugeordnet sind und die das Vorhandensein der Aufnahmevorrichtungen und/oder deren Belegung mit Proben-Behältnissen und anderen Behältnissen (z.B. für Chemikalien) erfassen können.

Bei einer bevorzugten Ausführungsform der erfindungsgemäßen in-vitro-diagnostischen Labor-Anordnung ist eine Kamera vorgesehen, mit der die Ablagefläche 5 des Arbeitstisches 4 überwacht wird. Diese Kamera kann fest im Raum montiert sein, beispielsweise an dem Kabelkanal 27 in ausreichendem vertikalen Abstand von der Ablagefläche 5. Eine solche Kamera 37 kann aber auch am Greifarm 6 des Handhabungsroboters 1 montiert sein, so dass die Kamera 37 flexibel an interessierende Bereiche der Ablagefläche 5 oder der Ablagen 3A oder 3B herangeführt werden kann. Das die Ablagefläche 5 oder einen Ausschnitt derselben wiedergebende Kamerabild wird von der Steuereinrichtung 13 ausgewertet, um die Ablage oder Entnahme von Proben-Behältnissen und Aufnahmevorrichtungen zu erfassen und in Abhängigkeit davon weitere Abläufe zu steuern. So kann beispielsweise die Ablage eingehender Proben-Behältnisse und Aufnahmevorrichtungen (Probenträger) 11 im Probeneingangsbereich 10 erfasst werden, woraufhin deren prä-analytische Behandlung initiiert werden kann. Vorzugsweise werden mit der Kamera oder mit weiteren Kameras und Sensoren sämtliche Orte auf dem Arbeitstisch 4 überwacht, an denen Proben-Behältnisse vorhanden sein können.

Die Steuereinrichtung 13 ist darüber hinaus mit einer Sensoranordnung gekoppelt, die unter anderem am Arbeitstisch 4 angeordnete Sensoren 14 und 15 sowie den Sensor 16 umfasst. Mit Hilfe dieser Sensoren 14, 15 und 16 wird der den Arbeitstisch 4 umgebende Raum, insbesondere die Gasse 8 zwischen dem Tisch 4 und den Analysegeräten 2A, 2B überwacht. Die Sensoren 14 und 15 sind an dem rechteckigen Tisch 4 in Bodennähe an den diagonal einander gegenüberliegenden Eckkanten angeordnet. Der Erfassungsbereich des Sensors 14 ist durch den mit der Strichlinie 17 dargestellten Winkel schematisch dargestellt und der Erfassungsbereich des Sensors 15 durch den mit der Strichlinie 18 dargestellten Winkel. Der aufgrund des Abstands zwischen den Analysegeräten 2A und 2B entstehende Durchgang zwischen den beiden Geräten wird durch den zusätzlichen Sensor 16 mit dem Erfassungswinkel 19 überwacht. Mit den Sensoren 14, 15 und 16 wird sowohl ein Eindringen einer Person 12 oder eines anderen Objekts in den Zugriffsbereich 33 des Greifarms 6 als auch die Annäherung der Person 12 oder des Objekts an diesen Zugriffsbereich 33 erfasst. Die die Annäherung von Personen oder Objekten an die Zugriffsbereiche oder das Eindringen von Personen oder Objekten in die Zugriffsbereiche anzeigenden Signale werden von den Sensoren und den gegebenenfalls vorhandenen Sensorsignal-Verarbeitungseinrichtungen an die Steuereinrichtung 13 übermittelt.

Bei der bevorzugten Ausführungsform wird beim Erfassen der Annäherung einer Person oder eines Objekts an den Zugriffsbereich 33 dann, wenn die Annäherung einen vorgegebenen Abstand unterschreitet, der Greifarm 6 von der Steuereinrichtung 13 veranlasst, seine Greifbewegungen und Schwenkbewegungen zu verlangsamen. Bewegt sich dann die Person 12 oder das Objekt in den Zugriffsbereich hinein, so wird der Greifarm 6 von der Steuereinrichtung 13 veranlasst, seine Bewegung vollständig einzustellen. Die Bewegung wird solange eingestellt, bis sämtliche Personen 12 oder Objekte den Zugriffsbereich 33 verlassen haben. Das Verlangsamen der Bewegung wird eingestellt, sobald sich keine Personen 12 oder Objekte mehr in der Nähe des Zugriffsbereichs 33 befinden, d. h. den vorgegebenen Abstand zu dem Zugriffsbereich unterschreiten.

Bei einer Weiterbildung der erfindungsgemäßen Labor-Anordnung sind die Sensoren 14, 15 und 16 und die Steuereinrichtung 13 so konfiguriert, dass die Steuereinrichtung 13 anhand der Signale der Sensoren 14, 15 und 16 ferner ermittelt, in welche Richtung und mit welcher Geschwindigkeit sich die erfassten Personen 12 oder Objekte bewegen, so dass die Ansteuerung einer verringerten Bewegungsgeschwindigkeit oder die Einstellung jeglicher Bewegung vorausschauend in Abhängigkeit von den Bewegungen der Objekte vorgenommen werden können.

Bei einer bevorzugten Ausführungsform der erfindungsgemäßen in-vitro-diagnostischen Labor-Anordnung ist die Steuereinrichtung 13 so konfiguriert, dass sie dann, wenn sie aufgrund der Signale der Sensoren 14, 15 und 16 erfasst hat, dass eine Bedienperson 12 die Gasse 8 vor den Analysegeräten betreten und wieder verlassen hat, mit Hilfe der Sensorsignale der Anwesenheitssensoren 31A und 31B prüft, ob Proben-Behältnisse von der Bedienperson 12 auf der Ablage 3A oder 3B abgelegt wurden, und berücksichtigt dies im weiteren Ablauf der Beschickung der Analysegeräte.

Bei der in den Figuren 1 und 2 dargestellten in-vitro-diagnostischen Labor-Anordnung mit wenigstens zwei Analysegeräten 3A und 3B, einem Handhabungsroboter 1 und einem Arbeitstisch 4 zur Prä- und Postanalytik der oben genannten Art wird eine mit der Steuereinrichtung 13 gekoppelte am Greifarm 6 des Handhabungsroboters 1 befestigte Kamera 37 derart angesteuert, dass sie erfasst, ob und an welchen Ablagepositionen Proben-Behältnisse in dem Probeneingangsbereich 10 auf der Ablagefläche 5 vorhanden sind. Die Steuereinrichtung 13 ist so konfiguriert, dass sie in Abhängigkeit von den Signalen der Sensoren 14, 15 und 16 und Bildsignalen der Kamera 37 die Entnahme der Proben-Behältnisse aus dem Probeneingangsbereich 10 und deren weitere Handhabung mittels des Greifarms 6 zur Vorbereitung und Durchführung der Analyse der Proben in den Analysegeräten 3A und 3B steuert. Dabei wird in einem ersten Schritt von der Steuereinrichtung 13 mit Hilfe der Sensoren 14, 15 und 16 das Eindringen einer Bedienperson 12 in den Zugriffsbereich 33 des Greifarms 6des Handhabungsroboters 1 erfasst. Daraufhin wird der Handhabungsroboter 1 von der Steuereinrichtung 13 veranlasst, die Bewegung des Greifarms 6 einzustellen. Anschließend wird von der Steuereinrichtung 13 mit Hilfe der Sensoren 14, 15 und 16 erfasst, dass die Bedienperson 12 den Zugriffsbereich 33 wieder verlassen hat. Von der Steuereinrichtung 13 wird mit Hilfe der am Greifarm 6 befestigten Kamera 37 erfasst, ob sich wenigstens ein Probenbehältnis an einer Ablageposition in dem Probeneingangsbereich 10 befindet, die vor dem Eindringen der Bedienperson 12 in den Zugriffsbereich 33 unbelegt war. Diese Überprüfung kann ausgeführt werden, nachdem die Bedienperson 12 den Zugriffsbereich 33 verlassen hat, kann aber auch bereits zuvor beginnen. Wenn sich wenigstens ein Probenbehältnis an einer Ablageposition in dem Probeneingangsbereich 10 befindet, die vor dem Eindringen der Bedienperson 12 in den Zugriffsbereich 33 unbelegt war, wird der Handhabungsroboter 1 von der Steuereinrichtung 13 veranlasst, mittels des Greifarms 6 das wenigstens eine Proben-Behältnis aus dem Probeneingangsbereich 10 zu entnehmen. Dann werden in der Scanstation 7 Identifikationsinformationen des wenigstens einen Proben-Behältnisses erfasst. Zusätzlich werden der Füllstand und/oder die Farbe des Proben-Verschlusses und/oder eine andere Eigenschaft des wenigstens einen Proben-Behältnisses erfasst. Wenn dabei keine oder fehlerhafte Identifikationsinformationen und/oder Eigenschaften erfasst werden, wird der Handhabungsroboter 1 von der Steuereinrichtung 13 veranlasst, mittels des Greifarms 6 das wenigstens eine Proben-Behältnis in eine Aufnahmevorrichtung 36A, 36B für fehlerhafte Proben-Behältnisse auf dem Arbeitstisch 4 abzulegen. Anderenfalls wird der Handhabungsroboter 1 von der Steuereinrichtung 13 veranlasst, mittels des Greifarms 6 das wenigstens eine Proben-Behältnis in eine Aufnahmevorrichtung (Tray) 25 zur Eingabe in eines der Analysegeräte 3A, 3B einzusetzen. Dann wird der Handhabungsroboter 1 von der Steuereinrichtung 13 veranlasst, mittels des Greifarms 6 das Proben-Behältnis in der Aufnahmevorrichtung 25 einem Analysegerät 3A oder 3B zur Analyse der enthaltenen Probe zuzuführen.

Der Probeneingangsbereich 10 weist einen separaten, markierten Notfallprobeneingangsbereich auf, der zur Ablage von Proben-Behältnissen und/oder Proben-Behältnisse aufnehmenden Aufnahmevorrichtungen 11A für Proben vorgesehen ist, die einer vorrangigen Analyse bedürfen. Wenn von der Steuereinrichtung 13 mit Hilfe der Kamera 37 erfasst wird, dass sich wenigstens ein Proben-Behältnis an einer Ablageposition in dem Notfallprobeneingangsbereich befindet, wird dieses wenigstens eine Proben-Behältnis mit Vorrang gegenüber der Behandlung sämtlicher anderer Proben-Behältnisse von dem Greifarm 6 aufgenommen, in der Scanstation 7 identifiziert, gegebenenfalls der Füllstand und die Farbe der Kappe des Proben-Behältnisses erfasst, die Probe zentrifugiert (sofern dies erforderlich ist) und zur Analyse den Analysegeräten 3A, 3B zugeführt.

Im Rahmen des Erfindungsgedankens sind zahlreiche alternative Ausführungsbeispiele denkbar. Beispielsweise können weitere die Gasse 8 übergreifende Handhabungsroboter 1 auf dem Arbeitstisch 4 angeordnet sein. Die Ablagefläche 5 des Arbeitstisches 4 braucht nicht rechteckig zu sein; sie kann beispielsweise eine L-Form haben. Die Steuereinrichtung 13 kann auch außerhalb des Arbeitstisches 4 angeordnet sein.

## Patentansprüche

1. In-vitro-diagnostische Labor-Anordnung mit wenigstens zwei Analysegeräten (2A, 2B), einem Handhabungsroboter (1) und einem Arbeitstisch (4) zur Prä- und Postanalytik,
wobei der Arbeitstisch (4) ortsfest angeordnet ist und eine Ablagefläche (5) zur Ablage von Proben enthaltenden Proben-Behältnissen und/oder Proben-Behältnisse aufnehmenden Aufnahmevorrichtungen (11, 11A, 20, 25) aufweist, wobei die Ablagefläche (5) einen Probeneingangsbereich (10) zur Ablage von zu analysierende Proben enthaltenden Proben-Behältnissen und/oder Aufnahmevorrichtungen (11, 11A) umfasst,
wobei der Arbeitstisch (4) präanalytische Vorrichtungen (7, 40) zur Behandlung von Proben vor deren Zuführen zu einem der Analysegeräte (2A, 2B) und postanalytische Vorrichtungen (22, 30) zur Lagerung und/oder Behandlung von Proben nach deren Entnahme aus einem der Analysegeräte (2A, 2B) aufweist,
wobei die Analysegeräte (2A, 2B) derart ortsfest und beabstandet zu dem Arbeitstisch (4) angeordnet sind, dass jeweils eine Gasse (8) zwischen dem Arbeitstisch (4) und jedem Analysegerät (2A, 2B) ausgebildet ist, wobei die Gassen (8) derart breit sind, dass sich eine Bedienperson (12) darin bewegen und dabei manuell Proben-Behältnisse und/oder Aufnahmevorrichtungen (25) den Analysegeräten (2A, 2B) zuführen oder aus den Analysegeräten (2A, 2B) entnehmen kann,
wobei der Handhabungsroboter (1) nicht eingehaust und an oder auf dem Arbeitstisch (4) montiert ist und einen Greifarm (6) mit mindestens sechs Achsen aufweist, wobei der Handhabungsroboter (1) einen Zugriffsbereich (33) derart aufweist, dass er zum Zuführen von Proben-Behältnissen und/oder Aufnahmevorrichtungen (25) zu den Analysegeräten (2A, 2B) und zur Entnahme von Proben-Behältnissen und/oder Aufnahmevorrichtungen (25) aus den Analysegeräten (2A, 2B) die Gasse (8) übergreifen kann,
wobei eine erste Sensoranordnung (14, 15, 16) ein Eindringen einer Bedienperson (12) oder eines anderen Objekts in den Zugriffsbereich (33) des Handhabungsroboters (1) außerhalb des Arbeitstisches (4) erfassen und dies anzeigende Sensorsignale an eine Steuereinrichtung (13) des Handhabungsroboters (1) übermitteln kann, wobei die Steuereinrichtung (13) dann, wenn die Sensorsignale ein Eindringen einer Bedienperson (12) oder eines anderen Objekts in den Zugriffsbereich (33) außerhalb des Arbeitstisches (4) anzeigen, den Handhabungsroboter (1) derart ansteuert, dass sein Greifarm (6) die Bewegung einstellt, solange die Bedienperson (12) oder das Objekt den Zugriffsbereich (33) nicht verlassen hat.

2. In-vitro-diagnostische Labor-Anordnung nach Anspruch 1, **dadurch gekennzeichnet, dass** eine mit der Steuereinrichtung (13) gekoppelte zweite Sensoranordnung, vorzugsweise eine Bilderfassungssensoranordnung (37), derart angeordnet und angesteuert ist, dass sie erfasst, ob und an welchen Ablagepositionen Proben-Behältnisse in dem Probeneingangsbereich (10) auf der Ablagefläche (5) vorhanden sind und
dass die Steuereinrichtung (13) so konfiguriert ist, dass sie in Abhängigkeit von den Signalen der ersten Sensoranordnung (14, 15, 16) und der zweiten Sensoranordnung (37) die Entnahme der Proben-Behältnisse aus dem Probeneingangsbereich (10) und deren weitere Handhabung mittels des Greifarms (6) zur Vorbereitung und Durchführung der Analyse der Proben in den Analysegeräten (3A, 3B) steuert.

3. In-vitro-diagnostische Labor-Anordnung nach Anspruch 2, **dadurch gekennzeichnet, dass** der Probeneingangsbereich (10) einen separaten, markierten Notfallprobeneingangsbereich aufweist, der zur Ablage von Proben-Behältnissen und/oder Proben-Behältnisse aufnehmenden Aufnahmevorrichtungen (11A) für Proben vorgesehen ist, die einer vorrangigen Analyse bedürfen.

4. In-vitro-diagnostische Labor-Anordnung nach einem der Ansprüche 1 - 3, **dadurch gekennzeichnet, dass** wenigstens ein weiterer Handhabungsroboter (1) vorgesehen ist, wobei die Zugriffsbereiche der Handhabungsroboter (1) jeweils einen Teil der Ablagefläche (5) des Arbeitstisches (4) und die Zugriffsbereiche insgesamt die gesamte Ablagefläche (5) des Arbeitstisches (4) abdecken, wobei sich die Zugriffsbereiche der Handhabungsroboter (1) in einem Überlappungsbereich auf der Ablagefläche (5) des Arbeitstisches überlappen, so dass eine Übergabe von Proben-Behältnissen und/oder Aufnahmevorrichtungen zwischen den Handhabungsrobotern (1) durch Ablage in dem Überlappungsbereich möglich ist.

5. In-vitro-diagnostische Labor-Anordnung nach einem der Ansprüche 1 - 4, **dadurch gekennzeichnet, dass** jedes Analysegerät (2A, 2B) wenigstens eine Ablagevorrichtung (3A, 3B) zur Entgegennahme von Proben-Behältnissen und/oder Aufnahmevorrichtungen (25) mit zu analysierenden Proben und zur Bereitstellung abzugebender Proben-Behältnisse und/oder Aufnahmevorrichtungen (25) aufweist, wobei der Ablagevorrichtung (3A, 3B) eine mit der Steuereinrichtung (13) des Handhabungsroboters (1) gekoppelte Anwesenheitssensoranordnung (31A, 32A, 31B, 32B) zum Erfassen der Anwesenheit der Proben-Behältnisse und/oder Aufnahmevorrichtungen zugeordnet ist, so dass die Steuereinrichtung (13) des Handhabungsroboters (1) das Zuführen von Proben-Behältnissen und/oder Aufnahmevorrichtungen zu den Analysegeräten (2A, 2B) und die Entnahme von Proben-Behältnissen und/oder Aufnahmevorrichtungen aus den Analysegeräten (2A, 2B) in Anhängigkeit von die Anwesenheit der Proben-Behältnisse und/oder Aufnahmevorrichtungen in den Ablagevorrichtungen (3A, 3B) anzeigenden Signalen der Anwesenheitssensoranordnung (31A, 32A, 31B, 32B) steuert.

6. In-vitro-diagnostische Labor-Anordnung nach einem der Ansprüche 1 - 5, **gekennzeichnet durch** eine mit der Steuereinrichtung (13) gekoppelte Identifikationsvorrichtung zum Erfassen von Identifikationsinformationen der Proben-Behältnisse, die eine auf dem Arbeitstisch (4) angeordnete Sensorvorrichtung (7) zum Lesen von auf den Proben-Behältnissen aufgebrachten Identifikationsinformationen aufweist, wobei die Identifikationsvorrichtung eine Vorrichtung zum Erfassen von Eigenschaften von Verschlüssen der Proben-Behältnisse und/oder eine Vorrichtung zum Erfassen eines Füllstands oder eines Volumens der in den Proben-Behältnissen enthaltenen Proben umfasst.

7. In-vitro-diagnostische Labor-Anordnung nach einem der Ansprüche 1 - 6, **dadurch gekennzeichnet, dass** die präanalytischen Vorrichtungen des Arbeitstisches (4) auf der Ablagefläche (5) einen Bereich (24) zur Ablage von den Analysegeräten (2A, 2B) zuzuführenden Proben-Behältnissen und/oder Proben-Behältnisse aufnehmenden Aufnahmevorrichtungen (25) umfassen, wobei die den Analysegeräten (2A, 2B) zuzuführenden Proben-Behältnisse und/oder die Proben-Behältnisse aufnehmenden Aufnahmevorrichtungen (25) so ausgestaltet sind, dass sie an die Analysegeräte (2A, 2B) angepasst sind.

8. In-vitro-diagnostische Labor-Anordnung nach einem der Ansprüche 1 - 7, **dadurch gekennzeichnet, dass** die Proben Untersuchungsmaterialproben und Kontrollproben umfassen, wobei die präanalytischen Vorrichtungen des Arbeitstisches (4) eine eine Kühlvorrichtung (21) aufweisende Aufnahmevorrichtung (20) zur Aufnahme von Kontrollproben enthaltenden Proben-Behältnissen umfassen.

9. In-vitro-diagnostische Labor-Anordnung nach einem der Ansprüche 1 - 8, **dadurch gekennzeichnet, dass** die präanalytischen Vorrichtungen des Arbeitstisches (4)
- eine von dem Greifarm (6) bedienbare und/oder autonom arbeitende Pipettierstation und/oder
- eine vorzugsweise von dem Greifarm (6) bedienbare Vorrichtung zum Entfernen von Verschlüssen von den Proben-Behältnissen und/oder
- eine Zentrifuge (40) und einen auf der Ablagefläche (5) angeordneten Bereich zur Ablage von Zentrifugen-Probenträgern (23)
umfassen.

10. In-vitro-diagnostische Labor-Anordnung nach einem der Ansprüche 1 - 9, **dadurch gekennzeichnet, dass** die postanalytischen Vorrichtungen des Arbeitstisches (4) einen Lagerbereich mit einer eine Kühlvorrichtung aufweisenden Aufnahmevorrichtung (22) zum Aufbewahren von aus den Analysegeräten (2A, 2B) entnommenen Proben-Behältnissen umfassen.

11. In-vitro-diagnostische Labor-Anordnung nach einem der Ansprüche 1 - 10, **dadurch gekennzeichnet, dass** die postanalytischen Vorrichtungen des Arbeitstisches (4) eine Vorrichtung (30) zum Wieder-Aufsetzen von Verschlüssen auf die Proben-Behältnisse umfassen, wobei die Vorrichtung (30) zum Wieder-Aufsetzen von Verschlüssen vorzugsweise von dem Greifarm (6) bedienbar ist.

12. In-vitro-diagnostische Labor-Anordnung nach einem der Ansprüche 1 - 11, **dadurch gekennzeichnet, dass** die erste Sensoranordnung (14, 15, 16) so konfiguriert ist, dass sie zusätzlich eine Annäherung einer Bedienperson (12) oder eines anderen Objekts an den Zugriffsbereich (33) des Handhabungsroboters (1) erfassen und dies anzeigende Sensorsignale an die Steuereinrichtung (13) übermitteln kann, wobei die Steuereinrichtung (13) dann, wenn diese Sensorsignale ein vorgegebenes Maß der Annäherung einer Bedienperson (12) oder eines anderen Objekts an den Zugriffsbereich (33), aber noch kein Eindringen in den Zugriffsbereich (33) anzeigen, den Handhabungsroboter (1) derart ansteuert, dass er die Bewegung des Greifarms (6) verlangsamt, bis sich die Bedienperson (12) oder das Objekt wieder um einen vorgegebenen Mindestabstand von dem Zugriffsbereich (33) entfernt hat.

13. In-vitro-diagnostische Labor-Anordnung nach einem der Ansprüche 1 - 12, **dadurch gekennzeichnet, dass** der Handhabungsroboter (1) so ausgebildet ist, dass er eine Geschwindigkeit vom mindestens 4 m/s, vorzugsweise mehr als 6 m/s, erreichen kann, wobei der Handhabungsroboter (1) vorzugsweise ein seriell-kinematischer Roboter ist.

14. Verfahren zum Betreiben einer in-vitro-diagnostischen Labor-Anordnung nach Anspruch 2 oder 3, wobei
a) von der Steuereinrichtung (13) mit Hilfe der ersten Sensoranordnung (14, 15, 16) das Eindringen einer Bedienperson (12) in den Zugriffsbereich (33) des Greifarms (6) des Handhabungsroboters (1) erfasst wird, woraufhin der Handhabungsroboter (1) von der Steuereinrichtung (13) veranlasst wird, die Bewegung des Greifarms (6) einzustellen,
b) anschließend von der Steuereinrichtung (13) mit Hilfe der ersten Sensoranordnung (14, 15, 16) erfasst wird, dass die Bedienperson (12) den Zugriffsbereich (33) verlassen hat,
c) von der Steuereinrichtung (13) mit Hilfe der zweiten Sensoranordnung (37) erfasst wird, ob sich wenigstens ein Proben-Behältnis an einer Ablageposition in dem Probeneingangsbereich (10) befindet, die vor dem Eindringen der Bedienperson (12) in den Zugriffsbereich (33) unbelegt war, und wenn dies der Fall ist,
c1) der Handhabungsroboter (1) von der Steuereinrichtung (13) veranlasst wird, mittels des Greifarms (6) das wenigstens eine Proben-Behältnis aus dem Probeneingangsbereich (10) zu entnehmen,
c2) Identifikationsinformationen des wenigstens einen Proben-Behältnisses erfasst werden,
c3) der Handhabungsroboter (1) von der Steuereinrichtung (13) veranlasst wird, mittels des Greifarms (6) das wenigstens eine Proben-Behältnis in eine Aufnahmevorrichtung (25) zur Eingabe in eines der Analysegeräte (3A, 3B) einzusetzen, und
c4) der Handhabungsroboter (1) von der Steuereinrichtung (13) veranlasst wird, mittels des Greifarms (6) das Proben-Behältnis in der Aufnahmevorrichtung (25) einem Analysegerät (3A, 3B) zur Analyse der enthaltenen Probe zuzuführen.

15. Verfahren nach Anspruch 14, **dadurch gekennzeichnet, dass** im Schritt c2) zusätzlich der Füllstand und/oder die Farbe des Proben-Verschlusses und/oder eine andere Eigenschaft des wenigstens einen Proben-Behältnisses erfasst werden.

16. Verfahren nach Anspruch 14 oder 15, **dadurch gekennzeichnet, dass** dann, wenn im Schritt c2) keine oder fehlerhafte Identifikationsinformationen und/oder Eigenschaften erfasst werden, der Handhabungsroboter (1) von der Steuereinrichtung (13) veranlasst wird, mittels des Greifarms (6) das wenigstens eine Proben-Behältnis in eine Aufnahmevorrichtung (36A, 36B) für fehlerhafte Proben-Behältnisse auf dem Arbeitstisch (4) abzulegen.

17. Verfahren nach einem der Ansprüche 14 - 16 zum Betreiben einer in-vitro-diagnostischen Labor-Anordnung nach Anspruch 3, **dadurch gekennzeichnet, dass** dann, wenn im Schritt c) von der Steuereinrichtung (13) mit Hilfe der zweiten Sensoranordnung (37) erfasst wird, dass sich wenigstens ein Proben-Behältnis an einer Ablageposition in dem Notfallprobeneingangsbereich befindet, die Schritte c1) bis c4) für dieses wenigstens eine Proben-Behältnis mit Vorrang gegenüber der Behandlung sämtlicher anderer Proben-Behältnisse ausgeführt werden.

## Claims

1. In vitro diagnostic laboratory arrangement comprising at least two analyzers (2A, 2B), a handling robot (1) and a work table (4) for pre-analytical and post-analytical processing,
wherein the work table (4) is arranged in a stationary manner and comprises a deposit surface (5) for depositing sample containers containing samples and/or receiving devices (11, 11A, 20, 25) accommodating sample containers, wherein the deposit surface (5) comprises a sample input region (10) for depositing sample containers and/or receiving devices (11, 11A) containing samples to be analyzed,
wherein the work table (4) comprises pre-analytical devices (7, 40) for treating samples before their being fed to one of the analyzers (2A, 2B) and post-analytical devices (22, 30) for storing and/or treating samples after their removal from one of the analyzers (2A, 2B),
wherein the analyzers (2A, 2B) are arranged in a stationary manner and at a distance from the work table (4) such that a respective aisle (8) is formed between the work table (4) and each analyzer (2A, 2B), wherein the aisles (8) are wide enough that an operator (12) can move therein while manually feeding sample containers and/or receiving devices (25) to the analyzers (2A, 2B) or removing them from the analyzers (2A, 2B),
wherein the handling robot (1) is not enclosed and is mounted on or to the work table (4) and comprises a gripper arm (6) having at least six axes, wherein the handling robot (1) has an access region (33) such that it can reach over the aisle (8) for feeding sample containers and/or receiving devices (25) to the analyzers (2A, 2B) and for removing sample containers and/or receiving devices (25) from the analyzers (2A, 2B),
wherein a first sensor arrangement (14, 15, 16) is able to detect an intrusion of an operator (12) or of another object into the access region (33) of the handling robot (1) outside the work table (4) and to transmit sensor signals indicative thereof to a control device (13) of the handling robot (1), wherein the control device (13), when the sensor signals indicate an intrusion of an operator (12) or of another object into the access region (33) outside the work table (4), controls the handling robot (1) such that its gripper arm (6) stops its movement for as long as the operator (12) or the object has not left the access region (33).

2. In vitro diagnostic laboratory arrangement according to claim 1, **characterized in that** a second sensor arrangement coupled to the control device (13), preferably an image capturing sensor arrangement (37), is arranged and controlled such that it detects whether, and at which deposit positions, sample containers are present in the sample input region (10) on the deposit surface (5), and
**in that** the control device (13) is configured such that, depending on the signals of the first sensor arrangement (14, 15, 16) and of the second sensor arrangement (37), it controls the removal of the sample containers from the sample input region (10) and their further handling by means of the gripper arm (6) for preparing and carrying out the analysis of the samples in the analyzers (3A, 3B).

3. In vitro diagnostic laboratory arrangement according to claim 2, **characterized in that** the sample input region (10) comprises a separate, marked emergency sample input region which is provided for depositing sample containers and/or receiving devices (11A) accommodating sample containers for samples requiring priority analysis.

4. In vitro diagnostic laboratory arrangement according to one of claims 1 to 3, **characterized in that** at least one further handling robot (1) is provided, wherein the access regions of the handling robots (1) each cover a part of the deposit surface (5) of the work table (4) and the access regions together cover the entire deposit surface (5) of the work table (4), wherein the access regions of the handling robots (1) overlap in an overlap region on the deposit surface (5) of the work table, such that a transfer of sample containers and/or receiving devices between the handling robots (1) is possible by depositing them in the overlap region.

5. In vitro diagnostic laboratory arrangement according to one of claims 1 to 4, **characterized in that** each analyzer (2A, 2B) comprises at least one deposit device (3A, 3B) for receiving sample containers and/or receiving devices (25) with samples to be analyzed and for providing sample containers and/or receiving devices (25) to be output, wherein the deposit device (3A, 3B) is assigned a presence sensor arrangement (31A, 32A, 31B, 32B), coupled to the control device (13) of the handling robot (1), for detecting the presence of the sample containers and/or receiving devices, such that the control device (13) of the handling robot (1) controls the feeding of sample containers and/or receiving devices to the analyzers (2A, 2B) and the removal of sample containers and/or receiving devices from the analyzers (2A, 2B) depending on signals of the presence sensor arrangement (31A, 32A, 31B, 32B) indicating the presence of the sample containers and/or receiving devices in the deposit devices (3A, 3B).

6. In vitro diagnostic laboratory arrangement according to one of claims 1 to 5, **characterized by** an identification device coupled to the control device (13) for detecting identification information of the sample containers, which identification device comprises a sensor device (7) arranged on the work table (4) for reading identification information applied to the sample containers, wherein the identification device comprises a device for detecting properties of closures of the sample containers and/or a device for detecting a fill level or a volume of the samples contained in the sample containers.

7. In vitro diagnostic laboratory arrangement according to one of claims 1 to 6, **characterized in that** the pre-analytical devices of the work table (4) comprise, on the deposit surface (5), a region (24) for depositing sample containers to be fed to the analyzers (2A, 2B) and/or receiving devices (25) accommodating sample containers, wherein the sample containers to be fed to the analyzers (2A, 2B) and/or the receiving devices (25) accommodating sample containers are configured such that they are adapted to the analyzers (2A, 2B).

8. In vitro diagnostic laboratory arrangement according to one of claims 1 to 7, **characterized in that** the samples comprise analysis material samples and control samples, wherein the pre-analytical devices of the work table (4) comprise a receiving device (20), comprising a cooling device (21), for accommodating sample containers containing control samples.

9. In vitro diagnostic laboratory arrangement according to one of claims 1 to 8, **characterized in that** the pre-analytical devices of the work table (4) comprise:
- a pipetting station operable by the gripper arm (6) and/or operating autonomously, and/or
- a device, preferably operable by the gripper arm (6), for removing closures from the sample containers, and/or
- a centrifuge (40) and a region, arranged on the deposit surface (5), for depositing centrifuge sample carriers (23).

10. In vitro diagnostic laboratory arrangement according to one of claims 1 to 9, **characterized in that** the post-analytical devices of the work table (4) comprise a storage region with a receiving device (22), comprising a cooling device, for storing sample containers removed from the analyzers (2A, 2B).

11. In vitro diagnostic laboratory arrangement according to one of claims 1 to 10, **characterized in that** the post-analytical devices of the work table (4) comprise a device (30) for re-fitting closures onto the sample containers, wherein the device (30) for re-fitting closures is preferably operable by the gripper arm (6).

12. In vitro diagnostic laboratory arrangement according to one of claims 1 to 11, **characterized in that** the first sensor arrangement (14, 15, 16) is configured such that it can additionally detect an approach of an operator (12) or of another object toward the access region (33) of the handling robot (1) and transmit sensor signals indicative thereof to the control device (13), wherein the control device (13), when these sensor signals indicate a predetermined degree of approach of an operator (12) or of another object toward the access region (33), but not yet an intrusion into the access region (33), controls the handling robot (1) such that it slows down the movement of the gripper arm (6) until the operator (12) or the object has moved away from the access region (33) again by a predetermined minimum distance.

13. In vitro diagnostic laboratory arrangement according to one of claims 1 to 12, **characterized in that** the handling robot (1) is designed such that it can reach a speed of at least 4 m/s, preferably more than 6 m/s, wherein the handling robot (1) is preferably a serial kinematic robot.

14. Method for operating an in vitro diagnostic laboratory arrangement according to claim 2 or 3, wherein
a) an intrusion of an operator (12) into the access region (33) of the gripper arm (6) of the handling robot (1) is detected by the control device (13) with the aid of the first sensor arrangement (14, 15, 16), whereupon the handling robot (1) is caused by the control device (13) to stop the movement of the gripper arm (6),
b) subsequently, it is detected by the control device (13) with the aid of the first sensor arrangement (14, 15, 16) that the operator (12) has left the access region (33),
c) it is detected by the control device (13) with the aid of the second sensor arrangement (37) whether at least one sample container is located at a deposit position in the sample input region (10) which was unoccupied before the intrusion of the operator (12) into the access region (33), and, if this is the case,
c1) the handling robot (1) is caused by the control device (13) to remove, by means of the gripper arm (6), the at least one sample container from the sample input region (10),
c2) identification information of the at least one sample container is detected,
c3) the handling robot (1) is caused by the control device (13) to insert, by means of the gripper arm (6), the at least one sample container into a receiving device (25) for input into one of the analyzers (3A, 3B), and
c4) the handling robot (1) is caused by the control device (13) to feed, by means of the gripper arm (6), the sample container in the receiving device (25) to an analyzer (3A, 3B) for analyzing the sample contained therein.

15. Method according to claim 14, **characterized in that**, in step c2), the fill level and/or the colour of the sample closure and/or another property of the at least one sample container are additionally detected.

16. Method according to claim 14 or 15, **characterized in that**, when no identification information and/or properties, or faulty identification information and/or properties, are detected in step c2), the handling robot (1) is caused by the control device (13) to deposit, by means of the gripper arm (6), the at least one sample container into a receiving device (36A, 36B) for faulty sample containers on the work table (4).

17. Method according to one of claims 14 to 16 for operating an in vitro diagnostic laboratory arrangement according to claim 3, **characterized in that**, when it is detected in step c) by the control device (13) with the aid of the second sensor arrangement (37) that at least one sample container is located at a deposit position in the emergency sample input region, steps c1) to c4) are carried out for this at least one sample container with priority over the treatment of all other sample containers.

## Revendications

1. Ensemble de laboratoire de diagnostic in vitro comprenant au moins deux appareils d'analyse (2A, 2B), un robot de manutention (1) et une table de travail (4) destinée à la pré-analytique et à la post-analytique,
dans lequel la table de travail (4) est disposée de manière fixe et comporte une surface de dépôt (5) destinée au dépôt de récipients d'échantillons contenant des échantillons et/ou de dispositifs de réception (11, 11A, 20, 25) recevant des récipients d'échantillons, la surface de dépôt (5) comprenant une zone d'entrée des échantillons (10) destinée au dépôt de récipients d'échantillons et/ou de dispositifs de réception (11, 11A) contenant des échantillons à analyser,
dans lequel la table de travail (4) comporte des dispositifs pré-analytiques (7, 40) destinés au traitement des échantillons avant leur acheminement vers l'un des appareils d'analyse (2A, 2B) et des dispositifs post-analytiques (22, 30) destinés au stockage et/ou au traitement des échantillons après leur prélèvement de l'un des appareils d'analyse (2A, 2B),
dans lequel les appareils d'analyse (2A, 2B) sont disposés de manière fixe et à distance de la table de travail (4), de telle sorte qu'une allée (8) respective est formée entre la table de travail (4) et chaque appareil d'analyse (2A, 2B), les allées (8) étant suffisamment larges pour qu'un opérateur (12) puisse s'y déplacer tout en acheminant manuellement des récipients d'échantillons et/ou des dispositifs de réception (25) vers les appareils d'analyse (2A, 2B) ou en les prélevant des appareils d'analyse (2A, 2B),
dans lequel le robot de manutention (1) n'est pas confiné et est monté sur ou au niveau de la table de travail (4) et comporte un bras de préhension (6) présentant au moins six axes, le robot de manutention (1) présentant une zone d'accès (33) telle qu'il puisse franchir l'allée (8) pour acheminer des récipients d'échantillons et/ou des dispositifs de réception (25) vers les appareils d'analyse (2A, 2B) et pour prélever des récipients d'échantillons et/ou des dispositifs de réception (25) des appareils d'analyse (2A, 2B),
dans lequel un premier ensemble de capteurs (14, 15, 16) est apte à détecter une pénétration d'un opérateur (12) ou d'un autre objet dans la zone d'accès (33) du robot de manutention (1) à l'extérieur de la table de travail (4) et à transmettre des signaux de capteur indiquant cette pénétration à un dispositif de commande (13) du robot de manutention (1), le dispositif de commande (13), lorsque les signaux de capteur indiquent une pénétration d'un opérateur (12) ou d'un autre objet dans la zone d'accès (33) à l'extérieur de la table de travail (4), commandant le robot de manutention (1) de telle sorte que son bras de préhension (6) interrompt son mouvement tant que l'opérateur (12) ou l'objet n'a pas quitté la zone d'accès (33).

2. Ensemble de laboratoire de diagnostic in vitro selon la revendication 1, **caractérisé en ce qu'**un second ensemble de capteurs couplé au dispositif de commande (13), de préférence un ensemble de capteurs de capture d'images (37), est disposé et commandé de manière à détecter si des récipients d'échantillons sont présents dans la zone d'entrée des échantillons (10) sur la surface de dépôt (5) et, le cas échéant, à quelles positions de dépôt, et
**en ce que** le dispositif de commande (13) est configuré de manière à commander, en fonction des signaux du premier ensemble de capteurs (14, 15, 16) et du second ensemble de capteurs (37), le prélèvement des récipients d'échantillons hors de la zone d'entrée des échantillons (10) et leur manutention ultérieure au moyen du bras de préhension (6) en vue de la préparation et de l'exécution de l'analyse des échantillons dans les appareils d'analyse (3A, 3B).

3. Ensemble de laboratoire de diagnostic in vitro selon la revendication 2, **caractérisé en ce que** la zone d'entrée des échantillons (10) comporte une zone d'entrée des échantillons d'urgence séparée et signalée, prévue pour le dépôt de récipients d'échantillons et/ou de dispositifs de réception (11A) recevant des récipients d'échantillons pour des échantillons nécessitant une analyse prioritaire.

4. Ensemble de laboratoire de diagnostic in vitro selon l'une des revendications 1 à 3, **caractérisé en ce qu'**au moins un autre robot de manutention (1) est prévu, les zones d'accès des robots de manutention (1) couvrant chacune une partie de la surface de dépôt (5) de la table de travail (4) et les zones d'accès couvrant ensemble l'intégralité de la surface de dépôt (5) de la table de travail (4), les zones d'accès des robots de manutention (1) se chevauchant dans une zone de chevauchement sur la surface de dépôt (5) de la table de travail, de sorte qu'un transfert de récipients d'échantillons et/ou de dispositifs de réception entre les robots de manutention (1) est possible par dépôt dans la zone de chevauchement.

5. Ensemble de laboratoire de diagnostic in vitro selon l'une des revendications 1 à 4, **caractérisé en ce que** chaque appareil d'analyse (2A, 2B) comporte au moins un dispositif de dépôt (3A, 3B) destiné à recevoir des récipients d'échantillons et/ou des dispositifs de réception (25) contenant des échantillons à analyser et à mettre à disposition des récipients d'échantillons et/ou des dispositifs de réception (25) à délivrer, le dispositif de dépôt (3A, 3B) étant associé à un ensemble de capteurs de présence (31A, 32A, 31B, 32B), couplé au dispositif de commande (13) du robot de manutention (1), destiné à détecter la présence des récipients d'échantillons et/ou des dispositifs de réception, de sorte que le dispositif de commande (13) du robot de manutention (1) commande l'acheminement de récipients d'échantillons et/ou de dispositifs de réception vers les appareils d'analyse (2A, 2B) et le prélèvement de récipients d'échantillons et/ou de dispositifs de réception hors des appareils d'analyse (2A, 2B) en fonction de signaux de l'ensemble de capteurs de présence (31A, 32A, 31B, 32B) indiquant la présence des récipients d'échantillons et/ou des dispositifs de réception dans les dispositifs de dépôt (3A, 3B).

6. Ensemble de laboratoire de diagnostic in vitro selon l'une des revendications 1 à 5, **caractérisé par** un dispositif d'identification couplé au dispositif de commande (13) et destiné à détecter des informations d'identification des récipients d'échantillons, lequel dispositif d'identification comporte un dispositif de détection (7) disposé sur la table de travail (4) et destiné à lire des informations d'identification apposées sur les récipients d'échantillons, le dispositif d'identification comprenant un dispositif de détection de propriétés de bouchons des récipients d'échantillons et/ou un dispositif de détection d'un niveau de remplissage ou d'un volume des échantillons contenus dans les récipients d'échantillons.

7. Ensemble de laboratoire de diagnostic in vitro selon l'une des revendications 1 à 6, **caractérisé en ce que** les dispositifs pré-analytiques de la table de travail (4) comprennent, sur la surface de dépôt (5), une zone (24) destinée au dépôt de récipients d'échantillons à acheminer vers les appareils d'analyse (2A, 2B) et/ou de dispositifs de réception (25) recevant des récipients d'échantillons, les récipients d'échantillons à acheminer vers les appareils d'analyse (2A, 2B) et/ou les dispositifs de réception (25) recevant des récipients d'échantillons étant configurés de manière à être adaptés aux appareils d'analyse (2A, 2B).

8. Ensemble de laboratoire de diagnostic in vitro selon l'une des revendications 1 à 7, **caractérisé en ce que** les échantillons comprennent des échantillons de matériau d'examen et des échantillons de contrôle, les dispositifs pré-analytiques de la table de travail (4) comprenant un dispositif de réception (20), comportant un dispositif de refroidissement (21), destiné à recevoir des récipients d'échantillons contenant des échantillons de contrôle.

9. Ensemble de laboratoire de diagnostic in vitro selon l'une des revendications 1 à 8, **caractérisé en ce que** les dispositifs pré-analytiques de la table de travail (4) comprennent :
- une station de pipetage pouvant être actionnée par le bras de préhension (6) et/ou fonctionnant de manière autonome, et/ou
- un dispositif, de préférence actionnable par le bras de préhension (6), destiné à retirer des bouchons des récipients d'échantillons, et/ou
- une centrifugeuse (40) et une zone, disposée sur la surface de dépôt (5), destinée au dépôt de supports d'échantillons pour centrifugeuse (23).

10. Ensemble de laboratoire de diagnostic in vitro selon l'une des revendications 1 à 9, **caractérisé en ce que** les dispositifs post-analytiques de la table de travail (4) comprennent une zone de stockage comportant un dispositif de réception (22), comportant un dispositif de refroidissement, destiné à conserver des récipients d'échantillons prélevés des appareils d'analyse (2A, 2B).

11. Ensemble de laboratoire de diagnostic in vitro selon l'une des revendications 1 à 10, **caractérisé en ce que** les dispositifs post-analytiques de la table de travail (4) comprennent un dispositif (30) destiné à remettre en place des bouchons sur les récipients d'échantillons, le dispositif (30) destiné à remettre en place des bouchons étant de préférence actionnable par le bras de préhension (6).

12. Ensemble de laboratoire de diagnostic in vitro selon l'une des revendications 1 à 11, **caractérisé en ce que** le premier ensemble de capteurs (14, 15, 16) est configuré de manière à pouvoir en outre détecter une approche d'un opérateur (12) ou d'un autre objet vers la zone d'accès (33) du robot de manutention (1) et transmettre des signaux de capteur indiquant cette approche au dispositif de commande (13), le dispositif de commande (13), lorsque ces signaux de capteur indiquent un degré prédéterminé d'approche d'un opérateur (12) ou d'un autre objet vers la zone d'accès (33), mais pas encore une pénétration dans la zone d'accès (33), commandant le robot de manutention (1) de telle sorte qu'il ralentit le mouvement du bras de préhension (6) jusqu'à ce que l'opérateur (12) ou l'objet se soit à nouveau éloigné de la zone d'accès (33) d'une distance minimale prédéterminée.

13. Ensemble de laboratoire de diagnostic in vitro selon l'une des revendications 1 à 12, **caractérisé en ce que** le robot de manutention (1) est conçu de manière à pouvoir atteindre une vitesse d'au moins 4 m/s, de préférence supérieure à 6 m/s, le robot de manutention (1) étant de préférence un robot à cinématique série.

14. Procédé pour faire fonctionner un ensemble de laboratoire de diagnostic in vitro selon la revendication 2 ou 3, dans lequel
a) une pénétration d'un opérateur (12) dans la zone d'accès (33) du bras de préhension (6) du robot de manutention (1) est détectée par le dispositif de commande (13) à l'aide du premier ensemble de capteurs (14, 15, 16), le robot de manutention (1) étant alors amené par le dispositif de commande (13) à interrompre le mouvement du bras de préhension (6),
b) il est ensuite détecté par le dispositif de commande (13), à l'aide du premier ensemble de capteurs (14, 15, 16), que l'opérateur (12) a quitté la zone d'accès (33),
c) il est détecté par le dispositif de commande (13), à l'aide du second ensemble de capteurs (37), si au moins un récipient d'échantillon se trouve à une position de dépôt dans la zone d'entrée des échantillons (10) qui était inoccupée avant la pénétration de l'opérateur (12) dans la zone d'accès (33), et, si tel est le cas,
c1) le robot de manutention (1) est amené par le dispositif de commande (13) à prélever, au moyen du bras de préhension (6), l'au moins un récipient d'échantillon hors de la zone d'entrée des échantillons (10),
c2) des informations d'identification de l'au moins un récipient d'échantillon sont détectées,
c3) le robot de manutention (1) est amené par le dispositif de commande (13) à introduire, au moyen du bras de préhension (6), l'au moins un récipient d'échantillon dans un dispositif de réception (25) destiné à être introduit dans l'un des appareils d'analyse (3A, 3B), et
c4) le robot de manutention (1) est amené par le dispositif de commande (13) à acheminer, au moyen du bras de préhension (6), le récipient d'échantillon se trouvant dans le dispositif de réception (25) vers un appareil d'analyse (3A, 3B) en vue de l'analyse de l'échantillon qu'il contient.

15. Procédé selon la revendication 14, **caractérisé en ce que**, à l'étape c2), le niveau de remplissage et/ou la couleur du bouchon d'échantillon et/ou une autre propriété de l'au moins un récipient d'échantillon sont en outre détectés.

16. Procédé selon la revendication 14 ou 15, **caractérisé en ce que**, lorsqu'aucune information d'identification et/ou propriété, ou des informations d'identification et/ou propriétés erronées, sont détectées à l'étape c2), le robot de manutention (1) est amené par le dispositif de commande (13) à déposer, au moyen du bras de préhension (6), l'au moins un récipient d'échantillon dans un dispositif de réception (36A, 36B) pour récipients d'échantillons défectueux sur la table de travail (4).

17. Procédé selon l'une des revendications 14 à 16 pour faire fonctionner un ensemble de laboratoire de diagnostic in vitro selon la revendication 3, **caractérisé en ce que**, lorsqu'il est détecté à l'étape c), par le dispositif de commande (13) à l'aide du second ensemble de capteurs (37), qu'au moins un récipient d'échantillon se trouve à une position de dépôt dans la zone d'entrée des échantillons d'urgence, les étapes c1) à c4) sont exécutées pour cet au moins un récipient d'échantillon en priorité par rapport au traitement de tous les autres récipients d'échantillons.
